# EUROPÄISCHE PATENTSCHRIFT

(11) **EP 3 098 673 B1**
(45) Veröffentlichungstag und Bekanntmachung des Hinweises auf die Patenterteilung: **23.08.2023**
(21) Anmeldenummer: 16171304.5
(22) Anmeldetag: 25.05.2016
(51) Int. Cl.: G05B 19/042

(54) **VERFAHREN UND VORRICHTUNG ZUR AUTOMATISCHEN VALIDIERUNG VON SICHERHEITSFUNKTIONEN AN EINEM MODULAR AUFGEBAUTEN SICHERHEITSSYSTEM**
METHOD AND DEVICE FOR AUTOMATED VALIDATION OF SECURITY FEATURES ON A MODULAR SECURITY SYSTEM
PROCEDE ET DISPOSITIF DE VALIDATION AUTOMATIQUE DE FONCTIONS DE SECURITE SUR UN SYSTEME DE SECURITE CONSTRUIT DE FAÇON MODULAIRE

(30) Priorität: 27.05.2015 DE 102015108359
(43) Veröffentlichungstag der Anmeldung: 30.11.2016
(60) Teilanmeldung: 23185739.2
(73) Patentinhaber: PHOENIX CONTACT GmbH & Co. KG, 32825 Blomberg (DE)
(72) Erfinder: HORN, Steffen, 32825 Blomberg (DE)
(74) Vertreter: Blumbach · Zinngrebe Patentanwälte PartG mbB

(56) Entgegenhaltungen:
- MANJU NANDA ET AL: "An Effective Verification and Validation Strategy for Safety-Critical Embedded Systems", INTERNATIONAL JOURNAL OF SOFTWARE ENGINEERING & APPLICATIONS, Bd. 4, Nr. 2, 31. März 2013 (2013-03-31), Seiten 123-142, XP055297133, ISSN: 0976-2221, DOI: 10.5121/ijsea.2013.4209
- Hermann Kopetz: "Real-Time Systems - Design Principles for Distributed Embedded Applications" In: "Real-time systems series", 1. Januar 2011 (2011-01-01), Springer, XP055118674, ISBN: 978-1-44-198236-0 * chapter 12 *

## Beschreibung

Die Erfindung betrifft ein Verfahren zur automatischen Validierung von Sicherheitsfunktionen eines mit Teilsystem-Modulen modular aufgebauten Sicherheitssystems nach Anspruch sowie ein System nach Anspruch 9, welches zur Durchführung des Verfahrens ausgebildet ist. Bevorzugte Ausgestaltungen der Erfindung sind in den abhängigen Ansprüchen definiert.

Zur Reduzierung eines Risikos für Mensch oder Umwelt bei automatisierten Prozessen, Maschinen und Anlagen müssen Sicherheitsfunktionen realisiert werden, wie z.B. die Abschaltung einer Maschine nach Drücken eines Not-Aus-Tasters oder die Überführung der Anlage in den Sicheren Zustand nach Erkennen eines Fehlers. Hier werden zunehmend fehlersichere Automatisierungssysteme innerhalb der automatisierten Prozessen, Maschinen und Anlagen eingesetzt. Im Allgemeinen realisieren diese fehlersicheren Automatisierungssysteme einerseits die eigentliche Sicherheitsfunktion (wie z.B. Not-Aus, Zweihand-Schaltung, Betriebsartenwahlschalter, ...), zum anderen Fehlererkennende und -beherrschende Maßnahmen nach z.B. in Standards (IEC 61508, 18013849, ...) festgelegten Mechanismen, welche dem aktuellen Stand der Technik entsprechen.

Insbesondere die Sicherheit betreffende Normreihe IEC 61508 umfasst hierbei ferner die Anwendung diverser Methoden zur Beherrschung von Fehlern, wie bspw. die Vermeidung systematischer Fehler in der Entwicklung, die Überwachung im laufenden Betrieb zur Erkennung von zufälligen Fehlern und/oder die sichere Beherrschung von erkannten Fehlern und der Übergang in einen vorher als sicher definierten Zustand. Alle diese Maßnahmen können Teil von bestimmten, vorher festgelegten Sicherheitsfunktionen sein. Allgemein kann gesagt werden, dass zwei- oder mehrkanalige Systeme, bei denen jeder Kanal für sich allein eine Sicherheitsfunktion auslösen kann, mit weniger technischem Aufwand eine höhere SIL erreichen, können als solche, die nur einen Kanal besitzen. Als Kanal wird dabei der Informationsfluss durch eine Sicherheitskette (Safety-Loop) bezeichnet, angefangen z.B. von der Anforderung einer Sicherheitsfunktion (z. B. durch einen Sensor, Näherungsmelder, Lichtschranke oder Taster), endend mit dem Aktor bzw. Stellglied, welches den sicheren Zustand einer Maschine einleitet.

Nicht zu dieser Sicherheit, im Rahmen der Erfindung gehört demnach die elektrische Sicherheit.

Ist durch geeignete Maßnahmen somit gewährleistet, dass ein elektrisches, elektronisches und/oder programmierbar System, aber auch eine einzelne Hardware und/oder Software-Komponente eine bestimmte Sicherheitsfunktion wirksam erfüllt, gilt dieses System bzw. die jeweilige Komponente im Rahmen der nachfolgenden Beschreibung und der Ansprüche als sicher oder sicherheitsgerichtet. Ein System, dass bestimmte Sicherheitsfunktionen erfüllen soll und hierbei von einer Vielzahl von Teilsystem-Modulen, d.h. von wenigstens zwei oder mehr als zwei Teilsystem-Modulen, aufgebaut ist, welche jeweils für sich wiederum Sicherheitsfunktionen erfüllen sollen, gilt im Rahmen der Erfindung als Sicherheitssystem. Gelten, für ein System, aber auch für eine einzelne Hardware- und/oder Software-Komponente keine sicherheitsrelevanten Anforderungen und ist somit für das System oder die einzelne Hardwareund/oder Software-Komponente nicht das Erfüllen einer bestimmten Sicherheitsfunktion durch geeignete Maßnahmen gewährleistet, gilt dieses System bzw. die jeweilige Komponente im Rahmen der nachfolgenden Beschreibung und der Ansprüche als nicht-sicher oder auch als Standard-System bzw. Standard-Komponente. Ein Sicherheitssystem sowie ein Standard-System kann wiederum Teil eines hierarchisch übergeordneten Systems sein.

In aktuellen Maschinen und Anlagen werden abhängig von der Ausdehnung der Anlagen und vom Automatisierungsgrad Kommunikationssysteme, wie z.B. Ethernet-basierte Netzwerke oder Feldbusse verwendet, die dezentrale E/A-Geräte (Eingabe-/Ausgabe-Geräte, wie z.B. Sensoren bzw. Aktoren) und Steuerungen verbinden. Für die Übertragung von sicherheitsrelevanten Daten werden in der Regel sichere Kommunikationsprotokolle benutzt.

Sichere Netzwerkprotokolle sind heutzutage standardisiert, z.B. in der IEC 61784-3. Dort werden basierend auf Grundsätzen der sicheren Netzwerkkommunikation unterschiedliche Sicherheitsprofile beschrieben. Alle diese Netzwerkprotokolle müssen die unterschiedlichen Fehlermodelle, wie z.B. Verfälschung, Verlust, Verzögerung, Vertauschung und so weiter von Daten und/oder Telegrammen, beherrschen. Sie definieren Fehler erkennende und Fehler beherrschende Maßnahmen in Kenntnis des ihnen unterlagerten Standard Netzwerkprotokolls, z.B. gemäß Feldbus- oder Ethernet-basierter Kommunikationsstandards, und der in diesen Netzwerken möglichen Fehlermodelle. Hierzu dient häufig das sogenannte Black Channel Prinzip. Den standardisierten Sicherheitsprotokollen ist gemein, dass sie die Sicherheitskommunikation innerhalb eines klar definierten und begrenzten geschlossenen Netzwerkraumes beschreiben. So gibt es z.B. Restriktionen bei Anzahl und Verteilung der Standards und sicheren Netzwerkteilnehmer.

Die Wirksamkeit der risikominimierenden technischen Maßnahmen in Maschinen und/oder Anlagen muss während der Inbetriebnahme einer Maschine oder Anlage durch eine Gesamtsicherheitsvalidierung nachgewiesen werden. Hierbei müssen alle Sicherheitsfunktionen vor Übergang in die Betriebsphase der Maschine oder Anlage in ihrer Wirksamkeit überprüft werden. Dies ist bei einer vollständigen und nicht veränderten Maschine oder Anlage noch überschaubar, wird allerdings in zunehmend häufiger vorkommenden modularen Maschinen oder Anlagen immer komplexer.

Wird darüber hinaus eine Vielzahl von Maschinen und/oder Anlagen innerhalb eines Systems eingesetzt, welche (auch) Sicherheitsfunktionen zusammenwirkend realisieren müssen, bilden diese im Rahmen der Erfindung Teilsystem-Module des Systems, welches dann aus der Vielzahl dieser Teilsystem-Module zusammen ein oder auch mehrere Sicherheitssysteme ausbildet. Als Beispiel für ein solches Sicherheitssystem sei eine Stanzanlage genannt, welche aus einer Zuführmaschine, einer Stanzmaschine und einer Auswurfmaschine gebildet ist, die alle drei bestimmte Sicherheitsfunktionen realisieren müssen, wobei auch die Stanzanlage insgesamt als zu betrachtendes Sicherheitssystem, d.h. beim Zusammenwirken der einzelnen Teilsystem-Module (d.h. gemäß Beispiel die Zuführmaschine, Stanzmaschine und Auswurfmaschine), bestimmte Sicherheitsfunktionen realisieren muss. Ein solches Sicherheitssystem im Rahmen der Erfindung besitzt somit in der Regel mehrere fehlersichere Automatisierungssysteme, die in verschiedenen Teilsystem-Modulen innerhalb eines Systems, d.h. eines Gesamtsystems angeordnet sind, jedoch innerhalb des Systems Zusammenwirken und übergreifend über die beteiligten Teilsystem-Module ein Sicherheitssystem ausbilden. Hier muss demnach die Wirksamkeit der risikominimierenden technischen Maßnahmen durch eine Gesamtsicherheitsvalidierung des die beteiligten Teilsystem-Module übergreifenden Sicherheitssystems nachgewiesen werden.

Die einschlägigen Sicherheitsnormen und Richtlinien verpflichten die Maschinenhersteller, die sicherheitsrelevanten Kennwerte wie Ausfallraten, Diagnosedeckungsgrad, SafeFailure Fraction oder Reaktionszeiten für einzelne Module, d.h. insbesondere für vorgenannte Teilsystem-Module, d.h. einzelne Maschinen und/oder Anlagen, anzugeben. Setzt sich eine Maschine oder Anlage innerhalb eines Systems je nach betrachtender feingranularer Aufschlüsselung wiederum aus mehreren einzelnen Modulen zusammen, bilden diese Module wiederum Teilsystem-Module im Rahmen der Erfindung, die dann erst beim Zusammenbau die entsprechende Maschine oder Anlage ein Sicherheitssystem ausbilden. Die Kompilation und Zusammenführung dieser Teilsystem-Module erfordert aber einschlägiges sicherheitstechnisches Wissen, welches nicht immer beim Maschinenbetreiber vorhanden ist, der lediglich ein (Gesamt-)System, einschließlich einer (Gesamt-)Maschine aus einzelnen, von Herstellern beziehbaren Modulen und also Teilsystem-Modulen zusammenstellt.

Die heutige Zeit ist geprägt von Cyper Physical Systems (CPS), Verteilung von Intelligenzen, Internet of Things (IoT). Unter Industrie 4.0 wird der Einzug von Internet-Technologien in die Automatisierungstechnik beschrieben. Die komplette Vernetzung intelligenter Geräte vom Sensor/Aktor bis zur Steuerung ist die Voraussetzung für Modularisierung, Wiederverwendung und Adaptionsfähigkeit von Maschinenmodulen. Produktionsvorgänge können dann weiter optimiert werden und es kann z.B. in Losgrößen 1 gefertigt werden. Die Einbindung und Nutzung von Cloud Diensten ermöglicht zum Beispiel vorausschauende Diagnosen.

Heutige Sicherheitsstandards wie IEC 61508, EN 13849, IEC 62061, ... tragen der Modularisierung von Maschinenfunktionen, dynamischen Konfigurationsänderungen oder adaptiven Zusammenstellungen von vormals unbekannten Sicherheitsmodulen bisher nur teilweise Rechnung. So muss heute ein modulares System oder eine modulare Maschine mit über mehrere Module übergreifend zusammenwirkenden Sicherheitsfunktionen vor der Inbetriebnahme eine Gesamtsicherheitsvalidierung durchlaufen. Ändert sich die System- oder Maschinenkonfiguration, z.B. bei Austausch eines einzelnen Moduls oder auch in Folge von Alterungsprozessen innerhalb einzelner Module, so müssen neue Fehlerbetrachtungen, Fehlerrechnungen und Validationsschritte zum Nachweisen der für das System oder die Maschine notwendigen Sicherheitskategorie (bzw. Sicherheitslevels), z.B. SIL4, ausgeführt werden. Dies entspricht nicht den Flexibilitätsanforderungen der Betreiber modularer Systeme und Maschinen.

Die EP 2 053 476 der Anmelderin beschreibt u.a. einen Safety Server, welcher mittels eines Safety Agenten die sichere Kommunikation innerhalb eines geschlossenen Netzwerkes koordinieren kann und Sicherheitsfunktionen ausführt. Hierbei werden die Telegramme zwischen den Sicherheitsteilnehmern vom nicht sicheren Safety Agenten aktiv geroutet. Aufgabe des Safety Servers ist die Ausführung von Sicherheitsfunktionen mittels netzwerktechnischen Zugriffes auf sichere Ein- und Ausgänge.

Das Safety Bridge System der Anmelderin, seit 2009 zertifiziert, nutzt nicht sichere Netzwerkmaster (bzw. eine nicht sichere Standard Steuerung) innerhalb des Datenpfades zwischen sicheren Logikmodulen und den ihnen zugeordneten sogenannten Satelliten (sichere E/A Geräte) als nicht sichere Router der sicheren Telegramme. In einer Ausführungsform kopieren spezielle Funktionsbausteine letztendlich die Telegramme von einem sicheren Teilnehmer zum anderen, wodurch eine Punkt-zu-Punkt Beziehung entsteht. Für diesen Routing-Vorgang muss der nicht sichere Netzwerkmaster (bzw. die nicht sichere Standard Steuerung) die Adressen der angeschlossenen sicheren Teilnehmer kennen und verwalten. Hierdurch entsteht ein gewisser zusätzlicher Konfigurations- und Parametrierungsaufwand. Zusätzlich bedeutet das Routen innerhalb der Standard Steuerung auch einen gewissen Performance-Aufwand.

Die DE 10 2004 020 994 B4 beschreibt, wie mittels eines sicheren Konfigurationswerkzeuges ein Entwickler eines Sicherheitsschaltgeräts beim Hardware Design durch Anwendung und Überprüfung bestimmter computerimplementierter Regelsätze unterstützt wird. Dementsprechend werden eine Vielzahl von Schaltungskomponenten bereitgestellt, ausgewählt und verknüpft, wobei ferner eine Vielzahl von Regelsätzen bereitgestellt wird, und jeder Regelsatz wiederum eine Vielzahl von sicherheitstechnischen Konstruktionsregeln beinhaltet, wobei zumindest einer der Regelsätze eine Konstruktionsregel beinhaltet, die mehrkanalig-redundante Ausgangssignale der Schaltungskomponenten und/oder einen Rückführkreis für jedes Ausgangssignal erfordert. Die elektrische Schaltung ist ferner in Teilbereiche unterteilt und für jeden der Teilbereiche wird vor dem Auswählen und Verknüpfen der Schaltungskomponenten ein Regelsatz festgelegt und der hierdurch definierte Regelsatz ausgewählt und es wird geprüft, ob die ausgewählten und verknüpften Schaltungskomponenten den Konstruktionsregeln dieses definierten Regelsatzes vollständig entsprechen, so dass jede nachfolgende Auswahl und/oder Verknüpfung von Schaltungskomponenten in Abhängigkeit von dem ausgewählten definierten Regelsatz freigegeben oder verhindert wird, wobei der definierte Regelsatz angezeigt wird. Hierdurch soll das Konstruieren von sicherheitsgerichteten Schaltungen einfacher und schneller möglich sein, ohne dass die Fehlersicherheit der konstruierten Schaltung beeinträchtigt wird, wobei sich das Konstruieren hierbei auf das Konstruieren einer bestimmten Schaltung als Gesamtsystem bezieht. Denn zunächst werden einzelne Regelsätze, die jeweils eine Vielzahl von sicherheitstechnischen Konstruktionsregeln beinhalten, für diese Schaltung definiert und ausgewählt und anschließend die Schaltungskomponenten ausgewählt und verknüpft, die den Konstruktionsregeln der jeweiligen Regelsätze entsprechen. In der EP 2 605 096 B1 wird ein Mechanismus der zusätzlichen Überprüfung von Sicherheitsregeln innerhalb einer Cloud beschrieben, bei welchem sichere Ausgänge nicht eher ausgegeben werden, bevor nicht nachweislich von zwei unterschiedlichen Rechnern innerhalb der an und für sich nicht sicheren Cloud eine voneinander unabhängige Prüfung vorgenommen wurde. In diesem Fall übernimmt die Cloud gewissermaßen eine zusätzliche Sicherheitsfunktion neben der im Automatisierungssystem vorhandenen zentralen Sicherheitssteuerung.

Eine weitere Veröffentlichung "An Effective Verification and Validation Strategy For Safety Critical Embedded Systems" von Manju nanda und Jayanthi offenbart ein Validierungs- und Verifizierungsverfahren für Teilmodulen eines Sicherheitskritischen Systems.

Eine wesentliche Aufgabe der Erfindung besteht daher darin, eine sichere Validierung, insbesondere Online Validierung, von modularen Sicherheitssystemen (sicherheitsrelevanten Systemen), insbesondere von dynamischen und/oder sich in ihrer Konfiguration ändernden, insbesondere auch adaptiv ändernden, modularen Sicherheitssystemen, mit dem Ziel, die Validierung der Sicherheitsfunktionen, insbesondere nach Konfigurationsänderungen und/oder auch innerhalb der Betriebsphase eines Systems oder einer Maschine, weiter zu vereinfachen und vorzugsweise komplett zu automatisieren. Weiterhin ist es von Vorteil, wenn fehlerhafte (Gesamt-)Konfigurationen frühzeitig bzw. vorab und insbesondere ONLINE erkannt und verhindert bzw. abgelehnt werden können.

Die Lösung nach der Erfindung ist durch einen Gegenstand nach einem der anhängigen Ansprüche gegeben, wobei Gegenstand der abhängigen Ansprüche bevorzugte und zweckmäßige Ausgestaltungen der Lösung nach der Erfindung sind.

Demgemäß schlägt die Erfindung ein Verfahren zur automatischen Validierung von Sicherheitsfunktionen eines mit Teilsystem-Modulen modular aufgebauten Sicherheitssystems, welches bestimmte Sicherheitsfunktionen erfüllen soll und aus wenigstens zwei Teilsystem-Modulen aufzubauen oder aufgebaut ist, welche Teilsystem-Module jeweils für sich wiederum Sicherheitsfunktionen erfüllen sollen, wobei an das Sicherheitssystem eine Überprüfungseinrichtung angeschaltet wird oder werden kann, vor, welches die Schritte umfasst:
a) Hinterlegen von sicherheitsrelevanten Soll-Kennwerten eines Systems, welches ein aus einer Vielzahl von Teilsystem-Modulen, d.h. von wenigstens zwei oder auch mehr als zwei Teilsystem-Modulen, modular aufzubauendes oder aufgebautes Sicherheitssystem ausbildet, insbesondere von Restfehlerwahrscheinlichkeiten, Ausfallraten und/oder Gesamtreaktionszeiten, in maschinenlesbarer Form im Speicher einer Überprüfungseinrichtung,
b) Hinterlegen von lokalen, modulspezifischen sicherheitsrelevanten Ist-Kennwerten zumindest eines jeden einzelnen Teilsystem-Moduls, welches zum modularen Aufbau des Sicherheitssystems des Systems eingesetzt wird oder eingesetzt werden soll, in maschinenlesbarer Form, im jeweiligen Teilsystem-Modul,
c) Übertragen der lokalen, modulspezifischen sicherheitsrelevanten Ist-Kennwerte aus den einzelnen Teilsystem-Modulen, welche das Sicherheitssystem des Systems modular aufbauen sollen oder aktuell das Sicherheitssystem des Systems modular aufbauen, an die Überprüfungseinrichtung, insbesondere nachdem diese an das Sicherheitssystem angeschaltet ist,
d) automatisches Verarbeiten der übertragenen, insbesondere durch die Überprüfungseinrichtung ausgelesenen, lokalen, modulspezifischen sicherheitsrelevanten Ist-Kennwerte zu sich beim Zusammenwirken der einzelnen Teilsystem-Module ergebenden und auf das System bezogenen, übergreifenden sicherheitsrelevanten Ist-Kennwerten, und zwar durch die Überprüfungseinrichtung,
e) automatisches Vergleichen der sich ergebenden und auf das System bezogenen, übergreifenden sicherheitsrelevanten Ist-Kennwerte mit den im Speicher der Überprüfungseinrichtung hinterlegten Soll-Kennwerten des Systems, und zwar durch die Überprüfungseinrichtung und
f) automatisches Generieren eines Reaktionssignals in Abhängigkeit vom Ergebnis des Vergleiches, wobei bei Nicht-Erreichen eines Schwellwertes hinsichtlich wenigstens eines sich bei dem Vergleichen ergebenen Differenzwertes ein Reaktionssignal generiert wird.

In besonders bevorzugter Ausbildung ist vorgesehen, dass mit dem generierten Reaktionssignal bei Nicht-Erreichen eines Schwellwertes hinsichtlich wenigstens eines sich bei dem Vergleichen ergebenen Differenzwertes automatisch die aktuellen Sicherheitsfunktionen des Sicherheitssystems durch die Überprüfungseinrichtung freigegeben werden und/oder bei Überschreiten des Schwellwertes, automatisch eine Freigabe der aktuellen Sicherheitsfunktionen des Sicherheitssystems durch die Überprüfungseinrichtung das versagt wird, wobei insbesondere eine vorbestimmte sicherheitsrelevante Reaktion in jedem einzelnen von das Sicherheitssystem des Systems aktuell modular aufbauenden Teilsystem-Module ausgelöst wird.

Erfindungsgemäß prüft somit die, zweckmäßig über ein Netzwerk an das Sicherheitssystem angeschaltete Überprüfungseinrichtung, insbesondere ONLINE, d.h. im laufenden Betrieb, und permanent oder wiederholt, die Gesamtkonfiguration des modular mit Teilsystem-Modulen, welche in praktischer Ausführung insbesondere verschiedene Maschinen-Module und/oder Anlagen-Module umfassen, aufgebauten Sicherheitssystems hinsichtlich der Einhaltung sicherheitsrelevanter Kenngrößen, wie insbesondere Restfehlerwahrscheinlichkeit, Ausfallraten und/oder Gesamtreaktionszeiten. Indem die sicherheitsrelevanten Ist-Kennwerte der Teilsystem-Module an die Überprüfungseinrichtung übertragen werden, insbesondere indem die Überprüfungseinrichtung lesend auf die sicherheitsrelevanten Ist-Kennwerte der Teilsystem-Module zugreift, können hierdurch zu erreichende sicherheitsrelevante Zielgrößen überwacht werden. Bei Nicht-Erreichen dieser Zielgrößen kann die Überprüfungseinrichtung gegebenenfalls auch einzelne Teilsystem-Module, welche in praktischer Ausführung insbesondere verschiedene Maschinen-Module und/oder Anlagen-Module umfassen, oder auch das System als Ganzes in einen sicheren Zustand überführen. Die Reaktion der Überprüfungseinrichtung bei Erreichen und/oder bei Nicht-Erreichen der Zielgrößen oder weiterer Regeln ist bevorzugt frei projektierbar bzw. parametrierbar. Die erfindungsgemäße Überprüfungseinrichtung kann ferner in zweckmäßiger Ausgestaltung z.B. auch eine geplante Neukonfiguration oder Konfigurationsänderung des Sicherheitssystems im Vorfeld, d.h. OFFLINE und also vor Inbetriebnahme des Sicherheitssystems, prüfen und dieser zustimmen oder sie ablehnen.

Es sei daher darauf hingewiesen, dass die Schritte a) bis f) nicht alle zwingend online sondern je nach Ausgestaltung zumindest teilweise auch offline durchgeführt werden können.

Die Überprüfungseinrichtung kann hierbei Teil einer bereits an das Sicherheitssystem angeschalteten Einrichtung sein. Sie kann z.B. Teil einer Steuereinrichtung, eines der Teilsystem-Module oder Teil einer weiteren bereits angeschalteten Einrichtung sein. Die Formulierung, Teil einer bereits an das Sicherheitssystem angeschalteten Einrichtung sein, beinhaltet hierbei, dass eine solche Einrichtung zumindest die Funktion der Überprüfungseinrichtung übernimmt oder übernehmen kann. Im Rahmen der Erfindung liegen jedoch insbesondere auch Ausführungsformen, bei welchen die Überprüfungseinrichtung als ein weiteres, zusätzlich zu den Teilsystem-Modulen als Überprüfungseinrichtung ausgebildetes Modul an das Sicherheitssystem angeschaltet wird oder werden kann.

Gemäß einer Ausgestaltung sind von der Erfindung Ausführungsformen umfasst, bei denen sich die in den einzelnen Teilsystem-Modulen hinterlegten sicherheitsrelevanten Ist-Kennwerte und/oder die in der Überprüfungseinrichtung hinterlegten sicherheitsrelevanten Soll-Kennwerte zur Laufzeit dynamisch ändern.

Die Erfindung sind ferner ergänzend oder alternativ vor, zumindest die vorstehend aufgezeigten Schritte c) bis f) bei jeder Konfigurationsänderung des mit Teilsystem-Modulen modular aufgebauten Sicherheitssystems durchzuführen und/oder zumindest die vorstehend aufgezeigten Schritte c) bis f) zyklisch oder zu anderen vorbestimmten Zeitpunkten durchzuführen.

Die Erfindung ermöglich somit auf einfache Weise, dass auch und insbesondere immer dann, wenn sich Gesamtsicherheitsfunktionen, z.B. durch Änderungen der Gesamtstruktur oder Änderungen einzelner Teilsicherheitsfunktionen oder deren Abhängigkeiten ändern, z.B. aufgrund Herausnahme, Austausch oder zusätzlicher Integration von Teilsystem-Modulen oder auch infolge sich während der Laufzeit dynamisch ändernden sicherheitsrelevanten Kennwerten, die sich ergebene Gesamtsicherheitsfunktion automatisch zu überprüfen.

Ergänzend oder alternativ ist jedoch auch vorgesehen, dass zumindest die Schritte c) bis f) auf Anforderung, insbesondere auf Anforderung von einer zentralen Steuereinrichtung oder wenigstens einem der Teilsystem-Module durchgeführt werden. Hierdurch kann folglich immer dann, wenn davon ausgegangen wird, dass eine "neue" Überprüfung hinsichtlich des Einhaltens der zu erreichende sicherheitsrelevante Zielgrößen, d.h. der Soll-Kennwerte, eine solche Überprüfung angestoßen werden. Dies kann z.B. durch einen Anwender, aber eben insbesondere durch zentrale Steuereinrichtung oder wenigstens eines der Teilsystem-Module erfolgen, wenn diese "glauben", beispielsweise infolge sich dynamisch ändernder Kennwerte, eine Überprüfung zu benötigen.

Gemäß einer besonders bevorzugten Ausführungsform wird der Schritt d) mittels eines Regelwerkes durchgeführt, auf welches von der Überprüfungseinrichtung zugegriffen werden kann.

Hierdurch können bei der Gesamtbetrachtung der Sicherheitsfunktionen eines zusammengesetzten modularen Systems nicht nur Einzelwerte der jeweiligen Teilsystem-Module addiert werden, sondern es können Datenflussabhängige Einflüsse und andere von der Architektur abhängige Regeln Einfluss auf den Gesamtwert berücksichtigt werden. Diese sind nicht immer einfach überschaubar und deshalb nach dem Stand der Technik besonders fehleranfällig. Die Erfindung ermöglicht somit bevorzugt ferner die Berücksichtigung derartiger Strukturinformationen, die Aufschluss über die strukturelle Zusammensetzung des (Sicherheits-)Systems geben. Mittels der Erfindung ist ein Maschinenbetreiber eines modularen Sicherheitssystems erstmals in der Lage, die Wirksamkeit aller einzelnen Module auch in ihrer zusammengesetzten Gesamtheit automatisch prüfen und validieren zu lassen. Von besonderem Vorteil hierbei ist, dass das Regelwerk vorab in der Überprüfungseinrichtung selbst hinterlegt sein kann oder in einer zentralen Steuereinrichtung derart, dass die Überprüfungseinrichtung hierauf zugreifen kann oder das Regelwerk auch erst unter Verwendung von Modulspezifischen logischen und/oder physikalischen Positionsdaten zusammenstellbar ist, z.B. durch die Auslesen oder anderweitig der Überprüfungseinrichtung zur Kenntnis gebrachten logischen und/oder physikalischen Adressen der angeschlossenen Teilsystem-Module. Ein solches von der Überprüfungseinrichtung eingesetztes Regelwerk kann somit ferner in zweckmäßig Weise Anwendungs- und/oder Ausgestaltungs-spezifisch z.B. in Form von maschinenlesbarem Code, Tabellen, Parametern, etc... vorliegen oder aufbereitet werden. Ein solches Regelwerk wird ferner zweckmäßig, insbesondere bei sich ändernden Gesamtsicherheitsfunktionen, geänderter Gesamtstruktur oder einzelner Teilsicherheitsfunktionen oder deren Abhängigkeiten aktualisiert, insbesondere automatisch aktualisiert, z.B. durch Nachladen neuer oder veränderter Regeln, die dann in der Überprüfungseinrichtung hinterlegt werden oder wieder durch die Überprüfungseinrichtung zugreifbar oder zusammenstellbar sind.

Gemäß weiteren zweckmäßigen Ausgestaltungen der Erfindung wird die Überprüfungseinrichtung über das Internet an das Sicherheitssystem angeschaltet wird und/oder als Cloud-Service im Internet bereitgestellt und/oder eine Kommunikation zwischen der Überprüfungseinrichtung und den Teilsystem-Modulen wird über sichere Kommunikationsprotokolle abgesichert und/oder die Überprüfungseinrichtung wird selbst als sicherheitsgerichtete Einrichtung ausgebildet. Hierdurch lässt sich der Gegenstand der Erfindung äußerst flexibel an jeweilige Anwendungen anpassen, so dass auch je nach Komplexität des zugrundeliegenden Systems neben privaten Netzwerken auch öffentliche Netzwerke, das Internet und/oder Cleuds mit eingebunden werden können, über welche insbesondere die Überprüfungseinrichtung an das zu validierende Sicherheitssystem angeschaltet werden kann. Die Absicherung der Kommunikation über sichere Kommunikationsprotokolle ist besonders zweckmäßig, da die bei der Kommunikation zwischen der Überprüfungseinrichtung und den Teilsystem-Modulen übertragenen Daten, Signale und Kennwerte selbst in der Regel sicherheitsrelevant sind, so dass bei erfindungsgemäßen Ausgestaltungen demnach insbesondere auch für die Schritte d) und e) nicht jeweils zwei unterschiedliche, voneinander unabhängig jedoch redundant arbeitende Einheiten in der Überprüfungseinrichtung vorgesehen sein müssen. Ergänzend oder alternativ kann jedoch gemäß einer bevorzugten Ausgestaltung ferner vorgesehen sein, die Überprüfungseinrichtung selber auch sicherheitsrelevant auszubilden, wobei dann zumindest deren hardwaretechnischer Aufbau zweckmäßig einer geforderten Sicherheitskategorie (Level) z.B. durch Mehrkanaligkeit und/oder geeigneter Diversität entspricht.

Gemäß der Erfindung ist ferner eine Überprüfungseinrichtung vorgesehen, die einen Speicher umfasst, in welchem sicherheitsrelevante Soll-Kennwerte eines Systems, welches ein aus wenigstens zwei oder einer größeren Anzahl von Teilsystem-Modulen modular aufzubauendes oder aufgebautes Sicherheitssystem ausbildet, insbesondere von Restfehlerwahrscheinlichkeiten, Ausfallraten und/oder Gesamtreaktionszeiten, in maschinenlesbarer Form hinterlegbar oder hinterlegt sind, wobei das Sicherheitssystem bestimmte Sicherheitsfunktionen erfüllen soll und die Teilsystem-Module jeweils für sich wiederum Sicherheitsfunktionen erfüllen sollen, und wobei die Überprüfungseinrichtung zur Durchführung des Verfahrens nach der Erfindung mit entsprechenden Einheiten ausgebildet ist. Insbesondere mit einer Kommunikationseinheit zum Übertragen von lokalen, modulspezifischen sicherheitsrelevanten Ist-Kennwerten, die in einzelnen Teilsystem-Modulen, welche das Sicherheitssystem des Systems modular aufbauen sollen oder aktuell das Sicherheitssystem des Systems modular aufbauen, in maschinenlesbarer Form hinterlegt sind, an die Überprüfungseinrichtung; sowie mit einer Verarbeitungseinheit zum automatischen Verarbeiten der ausgelesenen, lokalen, modulspezifischen sicherheitsrelevanten Ist-Kennwerte zu sich beim Zusammenwirken der einzelnen Teilsystem-Module ergebenden und auf das System bezogenen, übergreifenden sicherheitsrelevanten Ist-Kennwerten; mit einer Vergleichseinheit zum automatischen Vergleichen der sich ergebenden und auf das System bezogenen, übergreifenden sicherheitsrelevanten Ist-Kennwerte mit den im Speicher hinterlegten Soll-Kennwerten des Systems; und mit einer Signalgenerierungseinheit zum automatischen Generieren eines Reaktionssignals in Abhängigkeit des Vergleichsergebnisses.

Die Kommunikationseinheit kann zweckmäßig zum Auslesen der in einzelnen Teilsystem-Modulen hinterlegten lokalen, modulspezifischen sicherheitsrelevanten Ist-Kennwerten angepasst sein.

Ferner ist in zweckmäßiger Weise das generierte, insbesondere frei projektierbare bzw. parametrierbare, Reaktionssignal nicht nur zur Meldung des Vorliegens einer Freigabe und/oder Nichtfreigabe einsetzbar. Besonders bevorzugt wird das Reaktionssignal von der Signalgenerierungseinheit bei Nicht-Erreichen eines Schwellwertes hinsichtlich wenigstens eines sich bei dem Vergleichen ergebenen Differenzwertes als ein Freigabe-Signal generiert, welches zur automatischen "Freigabe" der der aktuellen Sicherheitsfunktionen des Sicherheitssystems einsetzbar ist, und/oder bei Überschreiten des Schwellwertes das Reaktionssignal als ein Nicht-Freigabe-Signal generiert, welches zum automatischen Versagen der Freigabe der aktuellen Sicherheitsfunktionen des Sicherheitssystems durch die Überprüfungseinrichtung einsetzbar ist, wobei insbesondere eine vorbestimmte sicherheitsrelevante Reaktion in jedem einzelnen der das Sicherheitssystem des Systems aktuell modular aufbauenden Teilsystem-Module ausgelöst wird.

Darüber hinaus schlägt die Erfindung eine Vorrichtung vor, welche ein Teilsystem-Modul umfasst, das geeignet ist zum Aufbauen eines aus wenigstens zwei oder einer größeren Anzahl von Teilsystem-Modulen modular aufzubauendes oder aufgebautes Sicherheitssystems. In dem Teilsystem-Modul sind lokale, modulspezifische sicherheitsrelevante Ist-Kennwerte in maschinenlesbarer Form hinterlegt, und das Teilsystem-Modul ist zur Durchführung des Verfahrens nach der Erfindung mit einer Einheit ausgebildet, zum Übertragen der lokalen, modulspezifischen sicherheitsrelevanten Ist-Kennwerten an eine Überprüfungseinrichtung nach der Erfindung, und insbesondere mit einer Einheit zum Empfangen eines Reaktionssignals durch die Überprüfungseinrichtung nach der Erfindung. Zweckmäßig ist die Einheit zum Empfangen eines Reaktionssignals insbesondere zum Empfangen eines Nicht-Freigabe-Signals durch die Überprüfungseinrichtung ausgebildet, wobei insbesondere eine vorbestimmte sicherheitsrelevante Reaktion in dem Teilsystem-Modul ausgelöst wird und/oder zum Empfangen eines Freigabe-Signals durch die Überprüfungseinrichtung.

Die Erfindung schlägt ferner ein entsprechendes System vor, welches ein aus einer Vielzahl von vorstehend aufgezeigten Teilsystem-Modulen modular aufzubauendes oder aufgebautes Sicherheitssystem ausbildet und in bevorzugter Ausführung ferner eine vorstehend aufgezeigte Überprüfungseinrichtung umfasst. Eine solche Überprüfungseinrichtung kann jedoch ergänzend oder alternativ auch gemeinsam an einer "zentralen Stelle" für mehrere solche Systeme nach der Erfindung bereitgestellt sein, z.B. zentral bei einem weltweit hierfür allein zuständigen TÜV (Technischer Überwachurigsverein).

Weitere Merkmale und Vorteile werden aus der nachfolgenden Beschreibung verschiedener Ausführungsbeispiele anhand der Zeichnung ersichtlich. In der Zeichnung zeigen:

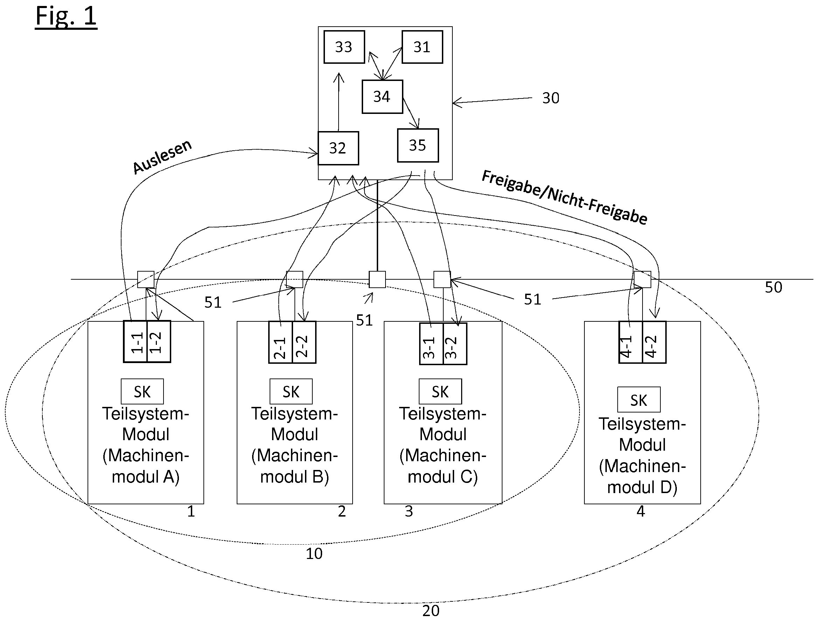

- Fig. 1: zeigt einen Teilausschnitt eines Systems zur Steuerung eines nicht näher dargestellten automatisierten, verschiedene Maschinen und/oder Anlagen umfassenden Prozesses mit ersten beispielhaften Ausführungsformen eines aus einer Vielzahl von Teilsystem-Modulen modular aufgebauten Sicherheitssystems, an welches zur automatischen Validierung von Sicherheitsfunktionen des Sicherheitssystems zusätzlich eine Überprüfungseinrichtung als ein weiteres Modul über einen Bus angeschaltet ist, und

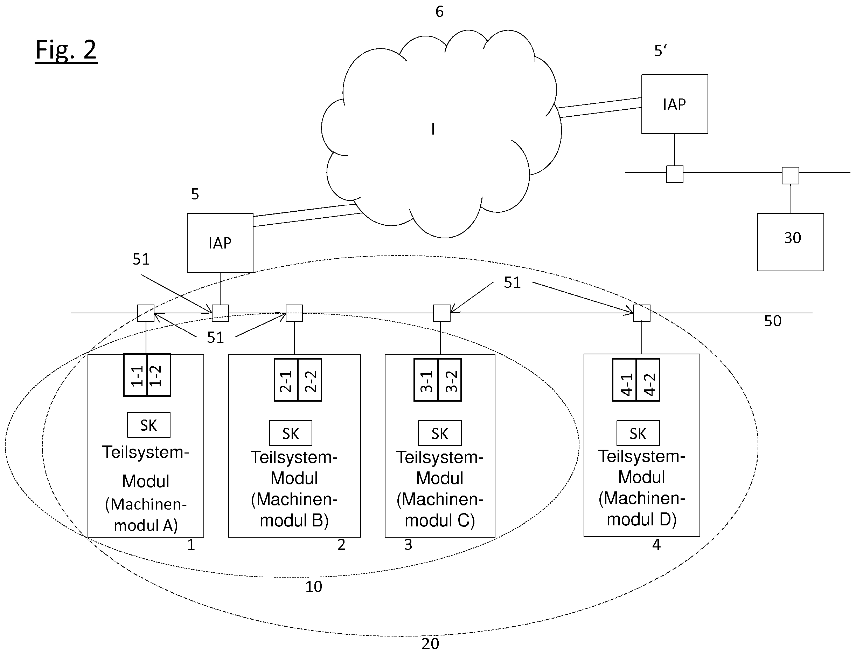

- Fig. 2: zeigt einen Teilausschnitt eines Systems zur Steuerung eines nicht näher dargestellten automatisierten, verschiedene Maschinen und/oder Anlagen umfassenden Prozesses mit zweiten beispielhaften Ausführungsformen eines aus einer Vielzahl von Teilsystem-Modulen modular aufgebauten Sicherheitssystems, an welches zur automatischen Validierung von Sicherheitsfunktionen des Sicherheitssystems zusätzlich eine Überprüfungseinrichtung als ein weiteres Modul über das Internet angeschaltet ist.

Nachfolgend wird zunächst vornehmlich anhand der Fig. 1 auf bevorzugte Ausführungsformen nach der Erfindung eingegangen, wobei in den Figuren 1 und 2 gleiche oder gleich wirkende Komponenten mit denselben Bezugszeichen belegt sind.

Fig. 1 zeigt einen Teilausschnitt eines Systems zur Steuerung eines nicht näher dargestellten automatisierten, verschiedene Maschinen und/oder Anlagen umfassenden Prozesses, mit einer ersten beispielhaften Ausführungsform eines aus wenigstens zwei Teilsystem-Modulen modular aufgebauten Sicherheitssystems 10, im dargestellten Fall einem aus drei Teilsystem-Modulen 1, 2, 3 modular aufgebauten Sicherheitssystems 10, an welches zur automatischen Validierung von Sicherheitsfunktionen des Sicherheitssystems 10 zusätzlich eine Überprüfungseinrichtung 30 als ein weiteres Modul über einen Bus 50 als Kommunikationssystem angeschaltet ist, und einer weiteren ersten beispielhaften Ausführungsform eines aus einer Vielzahl von vier Teilsystem-Modulen 1, 2, 3, 4 modular aufzubauendes Sicherheitssystems 20.

Die Teilsystem-Module 1, 2 und 3 besitzen Hard- und/oder Softwareeinheiten. Im vorliegenden Beispiel sind diese Teilsystem-Module 1, 2 und 3, die zusammen ein Sicherheitssystem ausbilden, ein Maschinenmodul A, ein Maschinenmodul B und ein Maschinenmodul C. Das Maschinenmodul A ist z.B. eine Zuführmaschine, das Maschinenmodul B eine Stanzmaschine und das Maschinenmodul C eine Auswurfmaschine, so dass die Teilsystem-Module 1, 2 und 3 im dargestellten Beispiel eine Stanzanlage als insgesamt zu betrachtendes Sicherheitssystem 10 ausbilden. Z.B. müssen hierbei auch alle drei Teilsystem-Module 1, 2 und 3 jeweils bestimmte Sicherheitsfunktionen realisieren, wobei in jedem Fall das insgesamt, d.h. beim Zusammenwirken der einzelnen Teilsystem-Module 1, 2, 3, zu betrachtende Sicherheitssystem 10 bestimmte Sicherheitsfunktionen realisieren muss. Ein solches Sicherheitssystem im Rahmen der Erfindung besitzt somit in der Regel mehrere fehlersichere Automatisierungssysteme, die in verschiedenen Teilsystem-Modulen innerhalb eines Systems, d.h. eines Gesamtsystems angeordnet sind, jedoch innerhalb des Systems Zusammenwirken und übergreifend über die beteiligten Teilsystem-Module ein Sicherheitssystem ausbilden.

Jedes der Teilsystem-Module 1, 2 und 3, ist folglich zum Aufbauen eines aus wenigstens zwei oder einer größeren Anzahl von Teilsystem-Modulen modular aufzubauendes oder aufgebautes Sicherheitssystems geeignet. Ferner sind in jedem der Teilsystem-Module 1, 2 und 3 jeweils lokale, modulspezifische sicherheitsrelevante Ist-Kennwerte SKdes einzelnen Teilsystem-Moduls 1, 2 oder 3, in maschinenlesbarer Form hinterlegt, z.B. einem entsprechenden, jedoch aus Übersichtlichkeitsgründen nicht näher dargestellten Speicher. Derartige lokale, modulspezifische sicherheitsrelevante Ist-Kennwerte SK umfassen insbesondere Ausfallraten, Diagnosedeckungsgrad, SafeFailure Fraction, Reaktionszeiten und/oder auch weitere sicherheitsrelevante Kennzahlen, Parameter, Prozessdaten.

Die Überprüfungseinrichtung 30 umfasst einen Speicher 31, in welchem wiederum sicherheitsrelevante Soll-Kennwerte des Systems insgesamt, welches das aus der Vielzahl von Teilsystem-Modulen 1, 2, 3, modular aufgebaute Sicherheitssystem 10 ausbildet, in maschinenlesbarer Form hinterlegbar oder hinterlegt sind. Derartige sicherheitsrelevante Soll-Kennwerte können insbesondere auf das Systems insgesamt bezogene Restfehlerwahrscheinlichkeiten, Ausfallraten, Gesamtreaktionszeiten und/oder auch weitere sicherheitsrelevante Kennzahlen, Parameter, Prozessdaten umfassen.

Ferner ist jedes der Teilsystem-Module 1, 2 und 3, mit einer (Kofftmunikations-) Einheit 1-1, 2-1, 3-1 ausgebildet, zum Übertragen der lokalen, modulspezifischen sicherheitsrelevanten Ist-Kennwerte SK an die Überprüfungseinrichtung 30.

Auch die Überprüfungseinrichtung 30 ist mit einer Kommunikationseinheit 32 zum Übertragen der lokalen, modulspezifischen sicherheitsrelevanten Kennwerte SK, die in einzelnen Teilsystem-Modulen 1, 2, und 3 hinterlegt sind, ausgebildet. Gemäß einer zweckmäßigen Ausgestaltung ist die Kommunikationseinheit 32 zum Auslesen der lokalen, modulspezifischen sicherheitsrelevanten Kennwerte SK, die in einzelnen Teilsystem-Modulen 1, 2, und 3 hinterlegt sind, ausgebildet.

Im vorliegenden Fall sind diese Einheiten 1-1, 2-1, 3-1 und 32 z.B. eine jeweils geeignet angepasste Kommunikationsschnittstelle, über welche jeweils die lokalen, modulspezifischen sicherheitsrelevanten Ist-Kennwerte SK über den Bus 50 mittels eines entsprechend verwendeten Netzwerkprotokolls übertragen werden können, also insbesondere aus dem entsprechenden Speicher des Teilsystem-Moduls 1, 2 oder 3 ausgelesen werden können.

Die Überprüfungseinrichtung 30 besitzt ferner eine Verarbeitungseinheit 33 zum automatischen Verarbeiten von ausgelesenen, lokalen, modulspezifischen sicherheitsrelevanten Ist-Kennwerten SK zu sich beim Zusammenwirken der einzelnen Teilsystem-Module ergebenden, übergreifenden sicherheitsrelevanten Ist-Kennwerten, sowie eine Vergleichseinheit 34 zum automatischen Vergleichen der sich ergebenden, übergreifenden sicherheitsrelevanten Ist-Kennwerte mit im Speicher 31 hinterlegten sicherheitsrelevanten Soll-Kennwerten des Systems insgesamt.

Darüber hinaus besitzt die Überprüfungseinrichtung 30 eine Einheit, insbesondere eine Signalisierungseinheit 35 und in zweckmäßiger Ausführung insbesondere eine Signalisierungseinheit mit entsprechend ausgebildeter Logik, zum automatischen Generieren eines Reaktionssignals in Abhängigkeit des Vergleichsergebnisses.

Mit einem solchen Reaktionssignal kann somit in Reaktion auf das Vergleichsergebnis automatisch die Einhaltung sicherheitsrelevanter Kenngrößen und/oder die Nicht-Einhaltung sicherheitsrelevanter Kenngrößen durch die Überprüfungseinrichtung 30 gemeldet werden, z.B. einer zentralen, in den Figuren nicht dargestellten Steuereinrichtung und/oder den Teilsystem-Modulen und/oder in einfachster Form auch lediglich über eine mit dem Reaktionssignal angesteuerte optische Anzeige für einen Anwender. Die Reaktion auf das Vergleichsergebnis und also das Reaktionssignal ist bevorzugt frei projektierbar bzw. parametrierbar.

In einer bevorzugten Ausgestaltung ist die Signalgenerierungseinheit 35 ausgebildet, insbesondere mit entsprechend ausgebildeter Logik, bei Nicht-Erreichen eines Schwellwertes hinsichtlich wenigstens eines sich bei dem Vergleichen ergebenen Differenzwertes als Reaktionssignal ein Freigabe-Signal zu generieren, welches zur automatischen "Freigabe" der aktuellen Sicherheitsfunktionen des Sicherheitssystems einsetzbar ist und die Überprüfungseinrichtung 30 dann insbesondere auch zum automatischen "Freigeben" der aktuellen Sicherheitsfunktionen des Sicherheitssystems an dieses angeschaltet ist.

Ergänzend oder alternativ ist die Signalgenerierungseinheit 35 ausgebildet, insbesondere mit entsprechend ausgebildeter Logik in einer bevorzugten Ausgestaltung, bei Überschreiten des Schwellwertes als Reaktionssignal ein Nicht-Freigabe-Signal zu generieren, welches zum automatischen Versagen der Freigabe der aktuellen Sicherheitsfunktionen des Sicherheitssystems durch die Überprüfungseinrichtung einsetzbar ist, wobei insbesondere eine vorbestimmte sicherheitsrelevante Reaktion in jedem einzelnen der das Sicherheitssystem des Systems aktuell modular aufbauenden Teilsystem-Module ausgelöst wird. Die Überprüfungseinrichtung 30 ist dann zum automatischen Versagen der Freigabe der aktuellen Sicherheitsfunktionen des Sicherheitssystems insbesondere auch entsprechend geeignet an das Sicherheitssystem angeschaltet.

Die Teilsystem-Module 1, 2 und 3 besitzen in zweckmäßiger Ausführung jeweils eine (Kommunikations-) Einheit 1-2, 2-2 und 3-2, d.h. insbesondere eine Kommunikationsschnittstelle, zum Empfangen eines solchen Reaktionssignals von der Überprüfungseinrichtung. In einer bevorzugten Ausgestaltung sind die Einheiten 1-2, 2-2 und 3-2 als Kommunikationsschnittstellen zum Empfangen eines Freigabe-Signals durch die Überprüfungseinrichtung 30 ausgebildet und/oder zum Empfangen eines Nicht-Freigabe-Signals durch die Überprüfungseinrichtung 30 ausgebildet, wobei insbesondere eine vorbestimmte sicherheitsrelevante Reaktion in dem Teilsystem-Module ausgelöst wird .

Bekanntermaßen soll in der Regel ein sicherheitsrelevantes System bei Erkennen eines Fehlers ganz oder teilweise in einen sicheren Zustand überführt werden. Daher werden im Rahmen der Erfindung die Teilsystem-Module 1, 2, 3 in der Regel jeweils eine Einheit 1-2, 2-2 und 3-2 zum Empfangen eines Nicht-Freigabe-Signals durch die Überprüfungseinrichtung 30 besitzen und die Überprüfungseinrichtung 30 in der Regel eine Signalisierungseinheit 35 zumindest zum automatischen Versagen der Freigabe durch die Überprüfungseinrichtung 30 bei Überschreiten des Schwellwertes besitzen, wobei die Signalisierungseinheit 35 mit den Einheiten 1-2, 2-2 und 3-2 miteinander verbunden sind. Anwendungsbedingt kann ein sicherheitsrelevantes System jedoch auch derart ausgelegt sein, dass es zumindest zu dessen Inbetriebnahme und/oder zumindest nach einer Konfigurationsänderung ein Freigabe-Signal benötigt und/oder im laufenden Betrieb nach Verstreichen eines bestimmten Zeitintervalls ohne, dass eine aktuelle Bestätigung einer fehlerfreien Funktionstüchtigkeit bzw. eines fehlerfreien Betriebs vorliegt, von sich aus auf einen Fehler erkennt. Daher können als eine optionale Ausführungsform im Rahmen der Erfindung die Teilsystem-Module 1, 2, 3 auch lediglich jeweils eine Einheit 1-2, 2-2 und 3-2 zum Empfangen eines Freigabe-Signals durch die Überprüfungseinrichtung 30 besitzen und die Überprüfungseinrichtung 30 eine Signalisierungseinheit 35 zum automatischen Freigeben durch die Überprüfungseinrichtung 30 bei Nicht-Erreichen des Schwellwertes besitzen. Selbstverständlich liegt anwendungsbedingt auch eine Kombination im Rahmen der Erfindung.

In jedem Fall ist jedoch in praktischer Ausführung die Reaktion der Überprüfungseinrichtung 30 bei Erreichen und/oder bei Überschreiten des Schwellwertes, also insbesondere bei Erreichen und/oder Nicht-Erreichen von Zielgrößen oder auch weiterer Regeln, bevorzugt parametrierbar.

In Fig. 1 sind beispielhaft durch gestrichelte, zur Einheit 32 blickende Pfeile die Schritte eines Auslesens und durch gestrichelte, von der Einheit 35 ausgehende Pfeile beispielhafte die Schritte eines Freigebens oder Nicht-Freigebens angezeigt.

Mit derartig eingerichteten und ausgebildeten Teilsystem-Modulen 1, 2 und 3 sowie Überprüfungseinrichtung 30 ist eine automatische Validierung von Sicherheitsfunktionen eines mit den Teilsystem-Modulen 1, 2 und 3 modular aufgebautes Sicherheitssystems 10 durchführbar, wobei gemäß Fig. 1 zusätzlich zu den Teilsystem-Modulen das weitere, als Überprüfungseinrichtung 30 ausgebildete Modul an das Sicherheitssystem angeschaltet wird oder werden kann. Hierbei werden zum Einen die sicherheitsrelevanten Soll-Kennwerte des Systems, welches das aus einer Vielzahl von Teilsystem-Modulen modular aufzubauende oder aufgebaute Sicherheitssystem 10 ausbildet, insbesondere von Restfehlerwahrscheinlichkeiten, Ausfallraten und/oder Gesamtreaktionszeiten, in maschinenlesbarer Form im Speicher 31 der Überprüfungseinrichtung 30 hinterlegt. Zum anderen werden jeweils die lokalen, modulspezifischen sicherheitsrelevanten Ist-Kennwerten SK zumindest eines jeden einzelnen Teilsystem-Moduls 1, 2 und 3, welches zum modularen Aufbau des Sicherheitssystems 10 des Systems eingesetzt wird oder eingesetzt werden soll, in maschinenlesbarer Form im jeweiligen Teilsystem-Modul hinterlegt. Hierauf basierend werden dann die lokalen, modulspezifischen sicherheitsrelevanten Ist-Kennwerte SK aus den einzelnen Teilsystem-Modulen 1, 2 und 3, welche das Sicherheitssystem des Systems modular aufbauen sollen oder aktuell das Sicherheitssystem 10 des Systems modular aufbauen, an die Überprüfungseinrichtung 30 übertragen, insbesondere durch die Überprüfungseinrichtung 30 ausgelesen. Das Übertragen der lokalen, modulspezifischen sicherheitsrelevanten Kennwerte SK erfolgt zweckmäßig ONLINE und permanent oder wiederholt, und demnach insbesondere bei an das Sicherheitssystem angeschalteter Überprüfungseinrichtung und bei laufendem Betrieb. Je nach Ausgestaltung kann jedoch das Übertragen, insbesondere auch ein Auslesen, in alternativer Ausführung auch offline durchgeführt werden, d.h. auch eine geplante Neukonfiguration oder Konfigurationsänderung des Sicherheitssystems kann insbesondere im Vorfeld und also vor Inbetriebnahme des Sicherheitssystems, geprüft und dieser zugestimmt oder abgelehnt werden. Ferner kann die Überprüfungseinrichtung 30 in bevorzugter Ausgestaltung z.B. benutzt werden, schon vorab prüfen zu lassen, ob eine geplante Neu- oder Umkonfiguration einer Gesamtanlage oder eines Sicherheitssystems machbar wäre, gegebenenfalls ohne das Sicherheitssystem insgesamt angeschlossenen zu haben. Mit anderen Worten, würde in diesem Fall nicht auf Basis von tatsächlichen Ist-Kennwerten oder tatsächlichen Online-Kennwerten zu Laufzeit geprüft werden, sondern man gibt der Überprüfungseinheit ein "Szenario" vor, welches dann nicht unmittelbar zur sicherheitsrelevanten Fehlerreaktion führen würde, falls es nicht passt. Die Vorgabe eines solchen "Szenario" kann z.B. durch Hinterlegen und Übertragen, insbesondere auch durch Auslesen, von lokalen, modulspezifischen sicherheitsrelevanten Ist-Kennwerten in bzw. aus Teilsystem-Modulen erfolgen, welche das Sicherheitssystem erst aufbauen sollen, jedoch noch nicht aktuell aufgebaut haben.

Darüber hinaus kann je nach Ausgestaltung das Übertragen, insbesondere auch durch Auslesen, in alternativer Ausführung auch durchgeführt werden, wenn die Überprüfungseinrichtung 30 zwar nicht an das Sicherheitssystem 30 insgesamt angeschaltet ist, jedoch über entsprechend angepasste Einheiten 1-1, 2-1, 3-1 und 32 das Auslesen der sicherheitsrelevanten Ist-Kennwerte SK aus den Teilsystem-Modulen 1, 2 und 3 auch anderweitig ermöglicht ist, z.B. über entsprechend als Funk-Einheiten ausgebildete Einheiten 1-1, 2-1, 3-1 und 32.

Nach Übertragen der sicherheitsrelevanten Ist-Kennwerte SK aus den Teilsystem-Modulen 1, 2 und 3 an die Überprüfungseinrichtung 30 werden, durch die Überprüfungseinrichtung 30 diese automatisch verarbeitet zu sich beim Zusammenwirken der einzelnen Teilsystem-Module ergebenden, übergreifenden sicherheitsrelevanten Ist-Kennwerten und die sich ergebenden, übergreifenden sicherheitsrelevanten Kennwerte mit den im Speicher der Überprüfungseinrichtung hinterlegten Soll-Kennwerten des Systems automatisch verglichen.

Basierend auf der jeweils anwendungsbedingten Ausgestaltung wird daraufhin durch die Überprüfungseinrichtung in Reaktion auf das Vergleichsergebnis entweder bei Nicht-Erreichen eines Schwellwertes hinsichtlich wenigstens eines sich bei dem Vergleichen ergebenen Differenzwertes, automatisch ein Signal generiert, welches signalisiert, dass die sich ergebenden, übergreifenden sicherheitsrelevanten Ist-Kennwerte von der Überprüfungseinrichtung als zulässig erachtet worden sind, und die aktuellen Sicherheitsfunktionen des Sicherheitssystems freigegeben werden können oder freizugeben sind, und/oder es wird durch die Überprüfungseinrichtung bei Überschreiten des Schwellwertes automatisch ein Signal generiert, welches signalisiert, dass die Freigabe der aktuellen Sicherheitsfunktionen des Sicherheitssystems von der Überprüfungseinrichtung versagt wird, wobei insbesondere eine vorbestimmte sicherheitsrelevante Reaktion in jedem einzelnen der das Sicherheitssystem des Systems aktuell modular aufbauenden Teilsystem-Module ausgelöst werden kann. Die hierzu bevorzugt von der Überprüfungseinrichtung generierten Signale können anwendungsbedingt zu einer übergeordneten Systemeinrichtung, wie z.B. einer zentralen, in den Figuren nicht dargestellten Steuereinrichtung, kommuniziert werden oder, wie in Fig. 1 gezeigt zu den einzelnen Teilsystem-Modulen 1, 2 und 3 kommuniziert werden.

Indem somit die sicherheitsrelevanten Ist-Kennwerte SK der Teilsysteme-Module 1, 2 und 3 an die Überprüfungseinrichtung 30 übertragen werden, insbesondere indem die Überprüfungseinrichtung 30 lesend auf die sicherheitsrelevanten Ist-Kennwerte SK der cl, 2 und 3 zugreift, können hierdurch zu erreichende sicherheitsrelevante Zielgrößen überwacht werden und bei Nicht-Erreichen dieser Zielgrößen kann die Überprüfungseinrichtung bevorzugt gegebenenfalls einzelne Teilsystem-Module oder auch das System als Ganzes in einen sicheren Zustand überführen.

Die Hinterlegung der sicherheitsrelevanten Soll-Kennwerte des Systems im Speicher der Überprüfungseinrichtung 30 kann auf vielfältige Weise erfolgen, beispielsweise durch einen Hersteller/Benutzer/Anwender manuell, z.B. anhand einer vorgegebenen Sicherheitskategorie, oder die sicherheitsrelevanten Soll-Kennwerte des Systems sind in einer übergeordneten Systemeinrichtung, wie z.B. einer zentralen, in den Figuren nicht dargestellten Steuereinrichtung abgelegt und werden zur Überprüfungseinrichtung kommuniziert. Die Hinterlegung der lokalen, modulspezifischen sicherheitsrelevanten Ist-Kennwerte in den Teilsystem-Modulen 1, 2 und 3 erfolgt zweckmäßig, bevor diese im System integriert werden und das Sicherheitssystem 10 ausbilden.

Folglich ist es nicht zwingend notwendig, die vorstehend aufgeführten Schritte des Hinterlegens, des Übertragens, des Verarbeitens, des Vergleichens und/oder des Generierens eines Reaktionssignals, also insbesondere auch eines Freigebens und/oder Nicht-Freigebens der Sicherheitsfunktionen, alle online durchzuführen, sondern je nach Ausgestaltung können einzelne dieser Schritte auch offline durchgeführt werden.

In jedem Fall sieht die Erfindung jedoch in zweckmäßiger Ausgestaltung vor, dass bei Konfigurationsänderungen oder - neueinstellung die im Speicher der Überprüfungseinrichtung 30 hinterlegten sicherheitsrelevanten Soll-Kennwerte des Systems entsprechend angepasst werden. Die erfindungsgemäße Überprüfungseinrichtung 30 kann folglich in zweckmäßiger Ausgestaltung z.B. auch eine geplante Konfigurationsänderung im Vorfeld prüfen und bevorzugt dieser zustimmen oder sie auch ablehnen.

Da je nach Ausgestaltung von der Erfindung auch Ausführungsformen umfasst sind, bei denen sich die in den einzelnen Teilsystem-Modulen hinterlegten sicherheitsrelevanten Ist-Kennwerte und/oder in der Überprüfungseinrichtung hinterlegten sicherheitsrelevanten Soll-Kennwerte zur Laufzeit dynamisch ändern, sind die beteiligten Module und Einrichtung bevorzugt angepasst, dass zumindest die Schritte des Übertragens, des Verarbeitens, des Vergleichens und/oder des Generierens eines Reaktionssignals, also insbesondere des Freigebens und/oder Nicht-Freigebens, zumindest bei jeder Konfigurationsänderung des mit Teilsystem-Modulen modular aufgebauten Sicherheitssystems durchgeführt werden und/oder, dass zumindest die Schritte des Übertragens, des Verarbeitens, des Vergleichens und/oder des Generierens eines Reaktionssignals, also insbesondere eines Freigebens und/oder Nicht-Freigebens, zyklisch oder zu anderen vorbestimmten Zeitpunkten, insbesondere temporär oder in zeitlichen Abständen zu bestimmten Betriebszuständen durchgeführt werden. Zur Erfassung von sich zur Laufzeit dynamisch ändernden sicherheitsrelevanten Kennwerten können die Teilsystem-Module z.B. selbstdiagnostizierende Logikeinheiten enthalten. Ergänzend oder alternativ sieht die Erfindung in einer Ausgestaltung ferner vor, dass zumindest die Schritte c) bis f) auf Anforderung, insbesondere auf Anforderung von einer zentralen Steuereinrichtung oder wenigstens einem der Teilsystem-Module durchgeführt werden. So können die Teilsysteme-Module und die Überprüfungseinrichtung einschließlich der Einheiten 1-1, 2-1, 3-1 und 32 in einer zweckmäßigen Ausgestaltung z.B. auch derart angepasst sein können, dass die Teilsystem-Module die jeweiligen sicherheitsrelevanten Ist-Kennwerte SK selber, d.h. von sich aus, an die Überprüfungseinrichtung 30 übertragen, z.B. bei Änderung der Ist-Kennwerte der Teilsystem-Module.

Somit können durch die Erfindung insbesondere immer dann, wenn sich Gesamtsicherheitsfunktionen, z.B. durch Änderungen der Gesamtstruktur oder Änderungen der einzelnen Teilsicherheitsfunktionen oder deren Abhängigkeiten, z.B. aufgrund Herausnahme, Austausch oder zusätzlicher Integration von Teilsystem-Modulen oder auch infolge sich während der Laufzeit dynamisch ändernden sicherheitsrelevanten Kennwerten (z.B. alterungsbedingt), die sich ergebene Gesamtsicherheitsfunktion automatisch überprüft werden.

Zum Beispiel soll das in Fig. 1 ausgebildete Sicherheitssystem 10, welches aus den Teilsystem-Modulen 1, 2 und 3 aufgebaut ist, nach einer Konfigurationsänderung durch Hinzufügen eines weiteren, insbesondere eine zusätzliche Teilsicherheitsfunktion gewährleistendes Teilsystem-Moduls 4, anschließend das Sicherheitssystem 20 ausbilden. Das hinzuzufügende Teilsystem-Modul 4 besitzt eine zu den Einheiten 1-1, 2-1 und 3-1 entsprechende Einheit 4-1 sowie eine zu den Einheiten 1-2, 2-2 und 3-2 entsprechende Einheit 4-2 und ist in Fig. 1 als Maschinenmodul D bezeichnet und stellt beispielsweise im Falle der vorerwähnten Stanzanlage noch eine, der als Maschinenmodul C bezeichneten Auswurfmaschine nachgelagerte Sortiermaschine dar. Das gesamte Sicherheitssystem 20 der geänderten Stanzanlage setzt sich nach Ausbildung demnach aus den Maschinenmodulen A, B, C, und D zusammen.

Jedes Teilsystem-Modul 1, 2, 3 und 4 des Sicherheitssystems 20 enthält gemäß einer Ausführungsform somit wiederum jeweils lokale, modulspezifische Sicherheitsfunktionen wie das Überwachen von Schutztüren oder Einlege- /Ausgabebereichen und/oder die Abschaltung des jeweiligen Maschinenmoduls bei Erkennen von Sicherheitsanforderungen oder Fehlern.

Im Zusammenwirken der Teilsystem-Modulen 1, 2, 3 und 4 des Sicherheitssystems 20 ergeben sich somit jedoch andere oder weitergehende übergreifende Gesamtsicherheitsfunktionen wie z.B. ein Anlagenweiter NOTAUS oder Abschalten von Teilbereichen (mehreren Maschinenmodulen) bei Erkennen von Fehlern innerhalb eines Maschinenmoduls oder der Kommunikation zwischen Maschinenmodulen als im Zusammenwirken lediglich der Teilsystem-Module 1, 2 und 3 des Sicherheitssystems 10.

Folglich ist die Gesamtsicherheitsfunktion des Sicherheitssystems 10 vor der Konfigurationsänderung eine andere als des Sicherheitssystems 20 nach der Konfigurationsänderung.

So können z.B. sicherheitsrelevante Reaktionszeiten im Datenfluss von Maschinenmodul A nach D größer sein, als die von A nach C. Weiterhin könnte die Restfehlerwahrscheinlichkeit der Gesamtsicherheitsfunktion des Sicherheitssystems 20 größer sein als die der Gesamtsicherheitsfunktion des Sicherheitssystems 10. Im schlimmsten Fall erfüllen die sich durch Konfigurationsänderung ergebenden neuen, zu sich beim Zusammenwirken der einzelnen Teilsystem-Module 1 bis 4 ergebenden, übergreifenden sicherheitsrelevanten Ist-Kennwerte des Sicherheitssystems 20 nicht mehr die für die Risikominimierung erforderlichen Anforderungen an die Gesamtsicherheitsfunktion des Sicherheitssystems 20 oder auch des Systems insgesamt oder der Gesamtmaschine, d.h. im vorliegenden Beispiel der Stanzanlage.

So könnten z.B. die in Figur 1 dargestellten Maschinenmodule jeweils mit einer Reaktionszeit von 10 ms untereinander kommunizieren. Somit vergehen von Erkennen einer Sicherheitsanforderung in Maschinenmodul A bis zur fehlersicheren Reaktion in Maschinenmodul C maximal 20 ms (bei einer angenommenen sequentiellen Verkettung der Maschinenmodule, wie bei Fig. 1 skizziert). Nach Hinzufügen von Maschinenmodul D ergibt sich als Reaktionszeit vom Erkennen einer Sicherheitsanforderung in Maschinenmodul A bis zum Abschalten in Maschinenmodul D eine Gesamtreaktionszeit von maximal 30 ms, welche möglicherweise außerhalb der spezifizierten Gesamtreaktionszeit (angenommen 25 ms), d.h. der in der Überprüfungseinrichtung 30 hinterlegten sicherheitsrelevanten Soll-Kennwerte des Systems, liegen würde. Diese Diskrepanz kann nach dem Stand der Technik von keinem der einzelnen Teilsystem-Module 1 bis 4 oder auch Maschinenmodule A-D alleine automatisch erkannt werden.

Das Beispiel der Reaktionszeiten ist ein einfach nachvollziehbares Beispiel. Es gibt allerdings weitaus komplexere Zusammenhänge zwischen Teilsicherheitsfunktionen, die teilweise auch von Abhängigkeiten zwischen Teilsicherheitsfunktionen, der Programmierung und/oder der Struktur des Gesamtsystems bestimmt werden.

Mit heutigen Mitteln müsste der Betreiber des Gesamtsystems im Vorfeld mögliche Konfigurationsänderungen beachten, die erforderlichen Kennzahlen zusammenfügen, prüfen, validieren. Im schlimmsten Fall muss er in der Betriebsphase die Wirksamkeit seiner Fehlererkennenden Maßnahmen nach Konfigurationsänderung erneut testen.

Gemäß einer besonders bevorzugten Ausführungsform ist daher vorgesehen, dass die Überprüfungseinrichtung 30 beim automatischen Verarbeiten der ausgelesenen lokalen modulspezifischen sicherheitsrelevanten Ist-Kennwerte zu sich beim Zusammenwirken der einzelnen Teilsystem-Module ergebenden, übergreifenden sicherheitsrelevanten Ist-Kennwerten auf ein Regelwerk zugreifen kann.

Hierdurch können bei der Gesamtbetrachtung der Sicherheitsfunktionen eines zusammengesetzten modularen Systems nicht nur Einzelwerte der jeweiligen Teilsystem-Module addiert werden, sondern es können Datenflussabhängige Einflüsse und andere von der Architektur abhängige Regeln Einfluss auf den Gesamtwert berücksichtigt werden. Diese sind nicht immer einfach überschaubar und deshalb nach dem Stand der Technik besonders fehleranfällig. Die Erfindung ermöglicht somit bevorzugt ferner die Berücksichtigung derartiger Strukturinformationen, die Aufschluss über die strukturelle Zusammensetzung des (Sicherheits-)Systems geben. Mittels der Erfindung ist ein Maschinenbetreiber einer modularen Sicherheitssystems erstmals in der Lage, die Wirksamkeit aller einzelnen Module auch in ihrer zusammengesetzten Gesamtheit automatisch prüfen und validieren zu lassen. Von besonderem Vorteil hierbei ist, dass das Regelwerk vorab in der Überprüfungseinrichtung selbst hinterlegt sein kann, z.B. im Speicher 31, oder in einer zentralen, in den Figuren nicht dargestellten Steuereinrichtung derart, dass die Überprüfungseinrichtung hierauf zugreifen kann oder das Regelwerk auch erst unter Verwendung von Modulspezifischen logischen und/oder physikalischen Positionsdaten zusammenstellbar ist, z.B. durch die Auslesen oder anderweitig der Überprüfungseinrichtung zur Kenntnis gebrachten logischen und/oder physikalischen Adressen der angeschlossenen Teilsystem-Module. Ein solches von der Überprüfungseinrichtung eingesetztes Regelwerk kann somit ferner in zweckmäßig Weise Anwendungs- und/oder Ausgestaltungs-spezifisch z.B. in Form von maschinenlesbarem Code, Tabellen, Parametern, etc... vorliegen oder aufbereitet werden. Ein solches Regelwerk wird ferner zweckmäßig, insbesondere bei sich ändernden Gesamtsicherheitsfunktionen, geänderter Gesamtstruktur oder einzelner Teilsicherheitsfunktionen oder deren Abhängigkeiten aktualisiert, insbesondere automatisch aktualisiert, z.B. durch Nachladen neuer oder veränderter Regeln, die dann in der Überprüfungseinrichtung hinterlegt werden oder wieder durch die Überprüfungseinrichtung zugreifbar oder zusammenstellbar sind. Ein solches Regelwerk kann Anwendungsspezifisch entsprechend feingranuliert aufgeschlüsselt sein.

Erfindungsgemäß überwacht nunmehr demnach die Überprüfungseinrichtung 30, welche auch als Sicherheitsvalidator bezeichnet werden kann, bevorzugt zur Laufzeit online die Einhaltung geforderter Sicherheitsanforderungen hinsichtlich der an einer Gesamtsicherheitsfunktion beteiligten Subsysteme, bzw. der jeweiligen Teilsystem-Module, welche die hierfür erforderlichen Teilsicherheitsfunktionen realisieren.

Wie vorstehend bereits aufgezeigt, können sich die zu überprüfenden sicherheitsrelevanten Kennwerte zur Laufzeit auch ändern, so dass eine zweckmäßige Online-Überprüfung innerhalb der Überprüfungseinrichtung 30 sogar ohne Konfigurationsänderung des Gesamtsystems, d.h. gemäß Fig. 1 ohne Änderung des Sicherheitssystems 10 zu dem Sicherheitssystem 20, vom Zustand "OK" (d.h. Freigabe) zum Zustand "Nicht-OK" (d.h. Nicht-Freigabe) wechseln kann und das Versagen der Freigabe z.B. durch ein entsprechendes Nicht-Freigabe-Signal signalisiert wird. Ändernde sicherheitsrelevante Kennwerte, insbesondere Ist-Kennwerte, können sich z.B. durch alternde Bauteile, wachsende Betriebsdauer von Maschinenmodulen, zu hohe Anzahl von Schaltspielen von Sicherheitsrelais ergeben.

In Abwandlung zu Fig. 1, bei welcher sowohl die Teilsystem-Module 1, 2, 3 eines hierdurch modular aufgebauten Sicherheitssystems 10 bzw. die Teilsystem-Module 1, 2, 3, 4 eines hierdurch modular aufzubauenden Sicherheitssystems 20 und die Überprüfungseinrichtung 30 an einem lokalen Netzwerk angeschaltet sind, z.B. an den Bus 50 als Kommunikationssystem mittels entsprechender Buskoppeleinheiten 51, kann die Überprüfungseinrichtung 30, wie bei Fig. 2 dargestellt, beispielsweise über Internetzugangsstellen (Internet-Access-Points, "IAP") 5 und 5' und das Internet, z.B. einschließlich unter Nutzung von Cloud-Technologien 6, an das Gesamtsystem angeschlossen sein. Es sei darauf hingewiesen, dass in Fig. 2 aus Übersichtlichkeitsgründen auf die Darstellung von den Einheiten 31 bis 35 gemäß Fig. 1 entsprechenden Einheiten verzichtet wurde. Eine solche Überprüfungseinrichtung 30 kann jedoch ferner ergänzend oder alternativ auch gemeinsam an einer "zentralen Stellen" für mehrere solcher Gesamtsysteme nach der Erfindung bereitgestellt sein, z.B. zentral bei einem weltweit hierfür allein zuständigen TÜV (Technischer Überwachungsverein). Insbesondere in diesen Fällen greift die Überprüfungseinrichtung 30 somit über einen "Remote Anschluss" auf das System mit den zu validierenden Sicherheitsfunktionen zu. In weiterer Abwandlung zur Fig. 2 kann eine Überprüfungseinrichtung auch als Cloud-Service im Internet bereitgestellt sein.

In bevorzugter Ausgestaltung wird die Kommunikation zwischen der Überprüfungseinrichtung 30 und den Teilsystem-Modulen 1, 2 und 3 oder auch 1, 2, 3 und 4 über sichere Kommunikationsprotokolle abgesichert.

Hierdurch lässt sich der Gegenstand der Erfindung äußerst flexibel an jeweilige Anwendungen anpassen, so dass eben insbesondere auch je nach Komplexität des zugrundeliegenden Systems neben privaten Netzwerken auch öffentliche Netzwerke, das Internet und/oder Clouds mit eingebunden werden können, über welche insbesondere die Überprüfungseinrichtung an das zu validierende Sicherheitssystem angeschaltet werden kann. Die Absicherung der Kommunikation über sichere Kommunikationsprotokolle ist besonders zweckmäßig, da die bei der Kommunikation zwischen der Überprüfungseinrichtung und den Teilsystem-Modulen übertragenen Daten, Signale und Kennwerte selbst in der Regel sicherheitsrelevant sind, so dass bei erfindungsgemäßen Ausgestaltungen demnach insbesondere auch für die Schritte d) und e) nicht jeweils zwei unterschiedliche, voneinander unabhängig jedoch redundant arbeitende Einheiten in der Überprüfungseinrichtung vorgesehen sein müssen. Ergänzend oder alternativ kann jedoch gemäß einer bevorzugten Ausgestaltung ferner vorgesehen sein, die Überprüfungseinrichtung selber auch sicherheitsrelevant auszubilden, wobei zumindest deren hardwaretechnischer Aufbau, z.B. durch Mehrkanaligkeit und/oder geeigneter Diversität, einer geforderten Sicherheitskategorie (Level) entspricht. Insbesondere, wenn die Überprüfungseinrichtung als Cloud-Service und somit bevorzugt Software-basiert im Internet bereitgestellt wird, sind in diesem Fall zweckmäßigerweise im Wissen und Können eines Fachmanns liegende, zusätzliche absichernde Maßnahmen bereitzustellen, wenn die Überprüfungseinrichtung nicht auf sicherheitsrelevanter Hardware läuft.

Der Gegenstand der Erfindung ermöglicht somit in besonders bevorzugter Ausgestaltung insgesamt eine Validierung, insbesondere Online Validierung, modularer Maschinen und Systeme anhand von zu implementierenden Regelwerken bzw. -sätzen und sicheren Kommunikationsschnittstellen zur Prüfung, insbesondere Online Prüfung, bestimmter Maschinen und Anlagenkonfigurationen. Hierbei können IT-Mechanismen (Server, Cloud) mit berücksichtigt werden. Ferner können netzwerkfähigen Produkte vorbereitet werden, die Anforderungen der Zukunft im Umfeld "Industrie 4.0" zu erfüllen. Auch können automatisierte modulare Maschinen und Anlagen somit durch eine Überprüfungseinrichtung nach der Erfindung, die über Intranet und/oder Internet angeschlossen ist, ihre Konfiguration zur Laufzeit ändern, ohne dass hierfür bei Konfigurationsänderungen manuelle Sicherheitsvalidierungen durchgeführt werden müssen.

Auch wenn in der vorstehenden Beschreibung somit vorwiegend auf Ausführungsformen eingegangen worden ist, bei welchen die Überprüfungseinrichtung als ein weiteres, zusätzlich zu den Teilsystem-Modulen als Überprüfungseinrichtung ausgebildetes Modul an das Sicherheitssystem angeschaltet wird oder werden kann, kann die Überprüfungseinrichtung im Rahmen der Erfindung auch Teil einer bereits an das Sicherheitssystem angeschalteten Einrichtung sein. Sie kann z.B. Teil einer Steuereinrichtung, z.B. der vorerwähnten zentralen Steuereinrichtung, oder Teil eines der Teilsystem-Module oder Teil einer weiteren bereits angeschalteten Einrichtung sein. Die Formulierung, Teil einer bereits an das Sicherheitssystem angeschalteten Einrichtung sein, beinhaltet hierbei, dass eine solche Einrichtung zumindest die Funktion der Überprüfungseinrichtung übernimmt oder übernehmen kann.

Der Validierungsaufwand, insbesondere auch bei adaptiven sicheren modularen Maschinen, ist somit wesentlich vereinfacht und die hierdurch ermöglichte Flexibilisierung von sicheren modularen Maschinen wesentlich gesteigert.

### Bezugszeichenliste:

- 1, 2, 3, 4,: Teilsystem-Module;
- 1-1, 2-1, 3-1, 4-1: (Kommunikations-)Einheiten;
- 1-2, 2-2, 3-2, 4-2: (Kommunikations-)Einheiten;
- 5, 5': Irtternetzugangsstellen;
- 6: Cloud-Technologien;
- 10, 20: Sicherheitssystem;
- 30: Überprüfungseinrichtung;
- 31: Speicher;
- 32: Kommunikationseinheit;
- 33: Verarbeitungseinheit;
- 34: Vergleichseinheit;
- 35: Signalgenerierungseinheit;
- 50: Bus;
- 51: Buskoppeleinheiten

## Patentansprüche

1. Verfahren zur automatischen Validierung von Sicherheitsfunktionen eines mit Teilsystem-Modulen (1, 2, 3, 4) modular aufgebauten Sicherheitssystems (10, 20), welches bestimmte Sicherheitsfunktionen erfüllen soll und aus wenigstens zwei Teilsystem-Modulen (1, 2, 3, 4) aufgebaut ist, welche Teilsystem-Module (1, 2, 3, 4) jeweils für sich wiederum Sicherheitsfunktionen erfüllen sollen, wobei eine Überprüfungseinrichtung (30) an das Sicherheitssystem (10, 20) angeschaltet wird, umfassend die Schritte:
a) Hinterlegen von sicherheitsrelevanten Soll-Kennwerten eines Systems, welches ein Sicherheitssystem (10, 20), das wenigstens zwei Teilsystem-Module (1, 2, 3, 4) umfasst und aus den wenigstens zwei Teilsystem-Modulen (1, 2, 3, 4) modular aufgebaut ist, ausbildet, insbesondere von Restfehlerwahrscheinlichkeiten, Ausfallraten und/oder Gesamtreaktionszeiten, in maschinenlesbarer Form in einem Speicher (31) einer Überprüfungseinrichtung (30),
b) Hinterlegen von lokalen, modulspezifischen sicherheitsrelevanten Ist-Kennwerten in jedes der einzelnen Teilsystem-Moduls (1, 2, 3, 4), welches zum modularen Aufbau des Sicherheitssystems (10, 20) des Systems eingesetzt wird, in maschinenlesbarer Form im jeweiligen Teilsystem-Modul (1, 2, 3, 4),
c) Übertragen der lokalen, modulspezifischen sicherheitsrelevanten Ist-Kennwerte aus den einzelnen Teilsystem-Modulen (1, 2, 3, 4), welche aktuell das Sicherheitssystem (10, 20) des Systems modular aufbauen, an die Überprüfungseinrichtung (30), insbesondere durch Auslesen der lokalen, modulspezifischen sicherheitsrelevanten Ist-Kennwerte durch die Überprüfungseinrichtung (30) oder indem die Teilsystem-Module (1, 2, 3, 4) die lokalen, modulspezifischen sicherheitsrelevanten Ist-Kennwerte von sich aus übertragen, insbesondere nachdem diese an das Sicherheitssystem (10, 20) angeschaltet ist; **gekennzeichnet durch** die folgenden Schritte:
d) Verarbeiten der übertragenen, insbesondere durch die Überprüfungseinrichtung (30) ausgelesenen, lokalen, modulspezifischen sicherheitsrelevanten Ist-Kennwerte zu sicherheitsrelevanten Ist-Kennwerten des Sicherheitssystems (10, 20), welche sich beim Zusammenwirken der einzelnen Teilsystem-Module (1, 2, 3, 4) und beim Ausbilden des die einzelnen Teilsystem-Module (1, 2, 3, 4) übergreifenden Sicherheitssystems (10, 20) ergeben, und zwar durch die Überprüfungseinrichtung (30),
e) Vergleichen der sich ergebenden sicherheitsrelevanten Ist-Kennwerte des Sicherheitssystems (10, 20) mit den im Speicher (31) der Überprüfungseinrichtung (30) hinterlegten Soll-Kennwerten des Systems, und zwar durch die Überprüfungseinrichtung (30) und
f) Generieren eines Reaktionssignals in Abhängigkeit des Vergleichsergebnisses, wobei mit dem generierten Reaktionssignal bei Nicht-Erreichen eines Schwellwertes hinsichtlich wenigstens eines sich bei dem Vergleichen ergebenen Differenzwertes automatisch aktuelle Sicherheitsfunktionen des Sicherheitssystems (10, 20) durch die Überprüfungseinrichtung (30) freigegeben werden und/oder bei Überschreiten des Schwellwertes hinsichtlich wenigstens eines sich bei dem Vergleichen ergebenen Differenzwertes automatisch eine Freigabe von aktuellen Sicherheitsfunktionen des Sicherheitssystems (10, 20) durch die Überprüfungseinrichtung (30) versagt wird.

2. Verfahren nach Anspruch 1, **dadurch gekennzeichnet, dass** für den Fall, dass eine Freigabe der aktuellen Sicherheitsfunktionen des Sicherheitssystems (10, 20) durch die Überprüfungseinrichtung (30) versagt wird, eine vorbestimmte sicherheitsrelevante Reaktion in jedem einzelnen der das Sicherheitssystem (10, 20) des Systems aktuell modular aufbauenden Teilsystem-Module (1, 2, 3, 4) ausgelöst wird.

3. Verfahren nach Anspruch 1 oder 2, **dadurch gekennzeichnet, dass** die Schritte a) bis f) online oder zumindest teilweise offline durchgeführt werden.

4. Verfahren nach einem der Ansprüche 1, 2 oder 3, wobei sich die in den einzelnen Teilsystem-Modulen (1, 2, 3, 4) hinterlegten sicherheitsrelevanten Ist-Kennwerte und/oder die in der Überprüfungseinrichtung (30) hinterlegten sicherheitsrelevanten Soll-Kennwerte zur Laufzeit dynamisch ändern.

5. Verfahren nach einem der Ansprüche 1 bis 4, wobei die Überprüfungseinrichtung (30) als ein weiteres, zu den Teilsystem-Modulen (1, 2, 3, 4) zusätzliches als Überprüfungseinrichtung (30) ausgebildetes Modul an das Sicherheitssystem (10, 20) angeschaltet wird oder werden kann oder wobei die Überprüfungseinrichtung (30) Teil einer bereits an das Sicherheitssystem (10, 20) angeschalteten Einrichtung ist.

6. Verfahren nach einem der Ansprüche 1 bis 4, wobei die Überprüfungseinrichtung (30) über das Internet an das Sicherheitssystem (10, 20) angeschaltet wird und/oder als Cloud-Service im Internet bereitgestellt wird und/oder wobei eine Kommunikation zwischen der Überprüfungseinrichtung (30) und den Teilsystem-Modulen (1, 2, 3, 4) über sichere Kommunikationsprotokolle abgesichert wird und/oder wobei die Überprüfungseinrichtung (30) als sicherheitsgerichtete Einrichtung ausgebildet wird.

7. Verfahren nach einem der Ansprüche 1 bis 6, wobei zumindest die Schritte c) bis f) bei jeder Konfigurationsänderung des mit Teilsystem-Modulen (1, 2, 3, 4) modular aufgebauten Sicherheitssystems (10, 20) durchgeführt werden und/oder wobei zumindest die Schritte c) bis f) zyklisch durchgeführt werden und/oder wobei zumindest die Schritte c) bis f) auf Anforderung, insbesondere auf Anforderung von einer zentralen Steuereinrichtung oder wenigstens einem der Teilsystem-Module (1, 2, 3, 4) durchgeführt werden.

8. Verfahren nach einem der Ansprüche 1 bis 7, wobei der Schritt d) mittels eines Regelwerkes durchgeführt wird, auf welches von der Überprüfungseinrichtung (30) zugegriffen werden kann.

9. System, welches zur Durchführung des Verfahrens gemäß einem der Ansprüche 1-8 ausgebildet ist,
wobei das System ein Sicherheitssystem (10, 20), welches wenigstens zwei Teilsystem-Module (1, 2, 4, 4) umfasst und aus den wenigstens zwei Teilsystem-Modulen (1, 2, 3, 4) modular aufgebaut ist, ausbildet und eine an das Sicherheitssystem (10, 20) angeschaltete Überprüfungseinrichtung (30) umfasst,
wobei das Sicherheitssystem (10, 20) dazu ausgebildet ist, bestimmte Sicherheitsfunktionen zu erfüllen und die wenigstens zwei Teilsystem-Module (1, 2, 3, 4) dazu ausgebildet sind, jeweils für sich Sicherheitsfunktionen zu erfüllen,
wobei in jedem der wenigstens zwei Teilsystem-Module (1, 2, 3, 4) lokale, modulspezifische sicherheitsrelevante Ist-Kennwerte in maschinenlesbarer Form hinterlegt sind und jedes der wenigstens zwei Teilsystem-Module (1, 2, 3, 4) mit einer Einheit (1-1, 2-1, 3-1, 4-1) ausgebildet ist, die zum Übertragen der lokalen, modulspezifischen sicherheitsrelevanten Ist-Kennwerte an die Überprüfungseinrichtung (30) ausgebildet ist,
wobei die Überprüfungseinrichtung (30)
- einen Speicher (31), in welchem sicherheitsrelevante Soll-Kennwerte des Systems, insbesondere von Restfehlerwahrscheinlichkeiten, Ausfallraten und/oder Gesamtreaktionszeiten, in maschinenlesbarer Form hinterlegt sind,
- eine Kommunikationseinheit (32), die auch zum Übertragen der lokalen, modulspezifischen sicherheitsrelevanten Ist-Kennwerte von den Teilsystem-Modulen (1, 2, 3, 4) an die Überprüfungseinrichtung (30) ausgebildet ist, insbesondere durch Auslesen der Ist-Kennwerte durch die Kommunikationseinheit (32) oder indem die Teilsystem-Module (1, 2, 3, 4) die Ist-Kennwerte von sich aus übertragen,
- eine Verarbeitungseinheit (33), welche ausgebildet ist zum Verarbeiten der ausgelesenen, lokalen, modulspezifischen sicherheitsrelevanten Ist-Kennwerte zu sicherheitsrelevanten Ist-Kennwerten des Sicherheitssystems (10, 20), welche sich beim Zusammenwirken der einzelnen Teilsystem-Module (1, 2, 3, 4) und beim Ausbilden des die einzelnen Teilsystem-Module (1, 2, 3, 4) übergreifenden Sicherheitssystems (10, 20) ergeben,
- eine Vergleichseinheit (34), welche ausgebildet ist zum Vergleichen der sich ergebenden sicherheitsrelevanten Ist-Kennwerte des Sicherheitssystems (10, 20) mit den im Speicher (31) hinterlegten Soll-Kennwerten des Systems; und
- eine Signalgenerierungseinheit (35), welche ausgebildet ist zum Generieren eines Reaktionssignals in Abhängigkeit des Vergleichsergebnisses,
und ferner ausgebildet ist,
bei Nicht-Erreichen eines Schwellwertes hinsichtlich wenigstens eines sich bei dem Vergleichen ergebenen Differenzwertes als Reaktionssignal ein Freigabe-Signal zu generieren, welches zur automatischen "Freigabe" von aktuellen Sicherheitsfunktionen des Sicherheitssystems (10, 20) eingesetzt wird,
und/oder bei Überschreiten des Schwellwertes hinsichtlich wenigstens eines sich bei dem Vergleichen ergebenen Differenzwertes als Reaktionssignal ein Nicht-Freigabe-Signal zu generieren, welches zum automatischen Versagen der Freigabe von aktuellen Sicherheitsfunktionen des Sicherheitssystems (10, 20) eingesetzt wird, umfasst.

10. System nach Anspruch 9, wobei jedes der wenigstens zwei Teilsystem-Module (1, 2, 3, 4) eine Einheit (1-2, 2-2, 3-2, 4-2) zum Empfangen eines Reaktionssignals durch die Überprüfungseinrichtung (30) aufweist.

11. System nach Anspruch 10, wobei die Einheit (1-2, 2-2, 3-2, 4-2) zum Empfangen eines Reaktionssignals zum Empfangen eines Nicht-Freigabe-Signals durch die Überprüfungseinrichtung (30) ausgebildet ist, wobei insbesondere in jedem der wenigstens zwei Teilsystem-Module (1, 2, 3, 4) eine vorbestimmte sicherheitsrelevante Reaktion ausgelöst wird, und/oder die Einheit (1-2, 2-2, 3-2, 4-2) zum Empfangen eines Reaktionssignals zum Empfangen eines Freigabe-Signals durch die Überprüfungseinrichtung (30) ausgebildet ist.

12. System nach einem der Ansprüche 9 bis 11, wobei die Kommunikationseinheit (32) der Überprüfungseinrichtung (30) zum Auslesen der lokalen, modulspezifischen sicherheitsrelevanten Ist-Kennwerte ausgebildet ist.

## Claims

1. Method for automatically validating safety functions of a safety system (10, 20) which is modularly constructed with subsystem modules (1, 2, 3, 4), is intended to fulfill specific safety functions and is constructed from at least two subsystem modules (1, 2, 3, 4), which subsystem modules (1, 2, 3, 4) are each in turn intended to fulfill safety functions, with a checking device (30) being connected to the safety system (10, 20), comprising the steps:
a) storing of safety-relevant nominal characteristic values, in particular of residual fault probabilities, failure rates and/or total reaction times, in machine-readable form in a memory (31) of a checking device (30), of a system which forms a safety system (10, 20) which comprises at least two subsystem modules (1, 2, 3, 4) and is constructed modularly from the at least two subsystem modules (1, 2, 3, 4),
b) storing of local, module-specific safety-relevant actual characteristic values in each of the individual subsystem modules (1, 2, 3, 4), which is used for the modular construction of the safety system (10, 20) of the system, in machine-readable form in the respective subsystem module (1, 2, 3, 4),
c) transmitting the local, module-specific safety-relevant actual characteristic values from the individual subsystem modules (1, 2, 3, 4), which currently construct the safety system (10, 20) of the system in modular form, to the checking device (30), in particular by reading out the local, module-specific safety-relevant actual characteristic values by the checking device (30) or by the subsystem modules (1, 2, 3, 4) transmitting the local, module-specific safety-relevant actual characteristic values on their own to the checking device (30), in particular after this has been connected to the safety system (10, 20); **characterized by** the following steps:
d) processing, by the checking device (30), the transmitted, in particular read out by the checking device (30), local, module-specific safety-relevant actual characteristic values, to safety-relevant actual characteristic values of the safety system (10, 20), which result when the individual subsystem modules (1, 2, 3, 4) interact and when the safety system (10, 20) is constructed spanning the individual subsystem modules (1, 2, 3, 4),
e) comparing, by the verification device (30), the resulting safety-relevant actual characteristic values of the safety system (10, 20) with the nominal characteristic values of the system stored in the memory (31) of the checking device (30) and
f) generating a reaction signal as a function of the comparison result, with the generated reaction signal being used to automatically release current safety functions of the safety system (10, 20) by the checking device (30) if a threshold value is not reached with regard to at least one difference value resulting from the comparison and/or to automatically refuse to release current safety functions of the safety system (10, 20) by the checking device (30) if the threshold value is exceeded with regard to at least one difference value resulting from the comparison.

2. Method according to claim 1, **characterized in that**, in the event that a release of the current safety functions of the safety system (10, 20) is refused by the checking device (30), a predetermined safety-relevant reaction is triggered in each of the subsystem modules (1, 2, 3, 4) currently modularly constructing the safety system (10, 20) of the system.

3. Method according to claim 1 or 2, **characterized in that** steps a) to f) are carried out online or at least partially offline.

4. Method according to one of claims 1, 2 or 3, wherein the safety-relevant actual characteristic values stored in the individual subsystem modules (1, 2, 3, 4) and/or the safety-relevant nominal characteristic values stored in the checking device (30) change dynamically at runtime.

5. Method according to any one of claims 1 to 4, wherein the checking device (30) is or can be connected to the safety system (10, 20) as a further module designed as a checking device (30) in addition to the subsystem modules (1, 2, 3, 4), or wherein the checking device (30) is part of a device already connected to the safety system (10, 20).

6. Method according to any one of claims 1 to 4, wherein the checking device (30) is connected to the safety system (10, 20) via the Internet and/or is provided as a cloud service in the Internet and/or wherein a communication between the checking device (30) and the subsystem modules (1, 2, 3, 4) is secured via safety communication protocols and/or wherein the checking device (30) is designed as a safety-oriented device.

7. Method according to one of claims 1 to 6, wherein at least steps c) to f) are carried out for each configuration change of the safety system (10, 20) which is modularly constructed with subsystem modules (1, 2, 3, 4) and/or wherein at least steps c) to f) are carried out cyclically and/or wherein at least steps c) to f) are carried out on request, in particular on request from a central control device or at least one of the subsystem modules (1, 2, 3, 4).

8. Method according to any one of claims 1 to 7, wherein step d) is performed by means of a set of rules, which can be accessed by the checking device (30).

9. System adapted to perform the method according to any one of claims 1-8,
wherein the system forms a safety system (10, 20) comprising at least two subsystem modules (1, 2, 4, 4) and being modularly constructed from the at least two subsystem modules (1, 2, 3, 4), and comprises a checking device (30) connected to the safety system (10, 20),
wherein the safety system (10, 20) is designed to fulfill certain safety functions and the at least two subsystem modules (1, 2, 3, 4) are each designed to fulfill safety functions on their own,
wherein local, module-specific safety-relevant actual characteristic values are stored in machine-readable form in each of the at least two subsystem modules (1, 2, 3, 4), and each of the at least two subsystem modules (1, 2, 3, 4) is designed with a unit (1-1, 2-1, 3-1, 4-1) which is designed to transmit the local, module-specific safety-relevant actual characteristic values to the checking device (30),
wherein the checking device (30) comprises
- a memory (31) in which safety-relevant nominal characteristic values of the system, in particular of residual fault probabilities, failure rates and/or total response times, are stored in machine-readable form,
- a communication unit (32) which is also designed to transmit the local, module-specific safety-relevant actual characteristic values from the subsystem modules (1, 2, 3, 4) to the verification device (30), in particular by reading out the actual characteristic values by the communication unit (32) or by the subsystem modules (1, 2, 3, 4) transmitting the actual characteristic values on their own,
- a processing unit (33) which is designed to process the read-out, local, module-specific safety-relevant actual characteristic values to safety-relevant actual characteristic values of the safety system (10, 20) which result when the individual subsystem modules (1, 2, 3, 4) interact and when the safety system (10, 20) is constructed spanning the individual subsystem modules (1, 2, 3, 4) ;
- a comparison unit (34) which is designed to compare the resulting safety-relevant actual characteristic values of the safety system (10, 20) with the nominal characteristic values of the system stored in the memory (31); and
- a signal generation unit (35) adapted to generate a response signal as a function of the comparison result,
and further formed,
to generate, if a threshold value is not reached with regard to at least one difference value resulting from the comparison, a release signal as a reaction signal, which is used to automatically "release" current safety functions of the safety system (10, 20),
and/or
to generate, if the threshold value is exceeded with regard to at least one difference value resulting from the comparison, a non-release signal as a reaction signal, which is used to automatically refuse to release current safety functions of the safety system (10, 20).

10. System according to claim 9, wherein each of the at least two subsystem modules (1, 2, 3, 4) comprises a unit (1-2, 2-2, 3-2, 4-2) for receiving a reaction signal by the checking device (30).

11. System according to claim 10, wherein the unit (1-2, 2-2, 3-2, 4-2) is adapted to receive a reaction signal for receiving a non-release signal by the checking device (30), wherein in particular in each of the at least two subsystem modules (1, 2, 3, 4) a predetermined safety-related reaction is triggered, and/or the unit (1-2, 2-2, 3-2, 4-2) is adapted to receive a reaction signal for receiving a release signal by the checking device (30).

12. System according to any one of claims 9 to 11, wherein the communication unit (32) of the checking device (30) is designed to read out the local, module-specific safety-relevant actual characteristic values.

## Revendications

1. Procédé de validation automatique de fonctions de sécurité d'un système de sécurité (10, 20) constitué de manière modulaire avec des modules de système partiel (1, 2, 3, 4), qui doit remplir des fonctions de sécurité déterminées et est constitué d'au moins deux modules de système partiel (1, 2, 3, 4), lesquels modules de système partiel (1, 2, 3, 4) doivent remplir respectivement pour eux de nouveau des fonctions de sécurité, dans lequel un dispositif de vérification (30) est monté sur le système de sécurité (10, 20), comprenant les étapes de :
a) l'enregistrement de valeurs caractéristiques de consigne liées à la sécurité d'un système qui réalise un système de sécurité (10, 20) qui comporte au moins deux modules de système partiel (1, 2, 3, 4) et est constitué de manière modulaire des au moins deux modules de système partiel (1, 2, 3, 4), en particulier de vraisemblances d'erreur résiduelle, taux de panne et/ou temps de réaction globaux, sous une forme lisible par machine dans une mémoire (31) d'un dispositif de vérification (30),
b) l'enregistrement de valeurs caractéristiques réelles locales, liées à la sécurité, spécifiques au module dans chacun des modules de système partiel (1, 2, 3, 4) individuels qui est utilisé pour la structure modulaire du système de sécurité (10, 20) du système, sous une forme lisible par machine dans le module de système partiel (1, 2, 3, 4) respectif,
c) la transmission des valeurs caractéristiques réelles locales, liées à la sécurité, spécifiques au module des modules de système partiel (1, 2, 3, 4) individuels qui constituent actuellement le système de sécurité (10, 20) du système de manière modulaire, au dispositif de vérification (30), en particulier par lecture des valeurs caractéristiques réelles locales, liées à la sécurité, spécifiques au module par le dispositif de vérification (30) ou en ce que les modules de système partiel (1, 2, 3, 4) transmettent les valeurs caractéristiques réelles locales, liées à la sécurité, spécifiques au module à partir d'eux, en particulier après que celui-ci est connecté au système de sécurité (10, 20) ; **caractérisé par** les étapes suivantes :
d) le traitement des valeurs caractéristiques réelles locales, liées à la sécurité, spécifiques au module, lues en particulier par le dispositif de vérification (30), transmises en valeurs caractéristiques réelles, liées à la sécurité du système de sécurité (10, 20) qui résultent lors de la coopération des modules de système partiel (1, 2, 3, 4) individuels et lors de la réalisation du système de sécurité (10, 20) recouvrant les modules de système partiel (1, 2, 3, 4) individuels, et ce par le dispositif de vérification (30),
e) la comparaison des valeurs caractéristiques réelles, liées à la sécurité résultantes du système de sécurité (10, 20) avec les valeurs caractéristiques de consigne enregistrées dans la mémoire (31) du dispositif de vérification (30) du système, et ce par le dispositif de vérification (30) et
f) la génération d'un signal de réaction en fonction du résultat de comparaison, dans lequel avec le signal de réaction généré en cas de non-atteinte d'une valeur seuil en ce qui concerne au moins une valeur de différence résultant lors de la comparaison, des fonctions de sécurité actuelles du système de sécurité (10, 20) sont automatiquement validées par le dispositif de vérification (30) et/ou lors du dépassement de la valeur seuil en ce qui concerne au moins une valeur de différence résultant lors de la comparaison, une validation des fonctions de sécurité actuelles du système de sécurité (10, 20) est automatiquement mise en défaut par le dispositif de vérification (30).

2. Procédé selon la revendication 1, **caractérisé en ce que** dans le cas où une validation des fonctions de sécurité actuelles du système de sécurité (10, 20) est mise en défaut par le dispositif de vérification (30), une réaction liée à la sécurité prédéterminée dans chaque module individuel des modules de système partiel (1, 2, 3, 4) constituant de manière modulaire actuellement le système de sécurité (10, 20) du système est déclenchée.

3. Procédé selon la revendication 1 ou 2, **caractérisé en ce que** les étapes a) à f) sont réalisées en ligne ou au moins partiellement hors ligne.

4. Procédé selon la revendication 1, 2 ou 3, dans lequel les valeurs caractéristiques réelles, liées à la sécurité enregistrées dans les modules de système partiel (1, 2, 3, 4) individuels et/ou les valeurs caractéristiques de consigne liées à la sécurité enregistrées dans le dispositif de vérification (30) se modifient de manière dynamique sur la durée.

5. Procédé selon l'une quelconque des revendications 1 à 4, dans lequel le dispositif de vérification (30) est ou peut être connecté comme un autre module réalisé comme dispositif de vérification (30) supplémentaire aux modules de système partiel (1, 2, 3, 4) au système de sécurité (10, 20) ou dans lequel le dispositif de vérification (30) fait partie d'un dispositif déjà monté au niveau du système de sécurité (10, 20).

6. Procédé selon l'une quelconque des revendications 1 à 4, dans lequel le dispositif de vérification (30) est connecté par le biais de l'Internet au système de sécurité (10, 20) et/ou est fourni comme service cloud dans l'Internet et/ou dans lequel une communication entre le dispositif de vérification (30) et les modules de système partiel (1, 2, 3, 4) est assurée par le biais de protocoles de communication sécurisés et/ou dans lequel le dispositif de vérification (30) est réalisé comme dispositif orienté sur la sécurité.

7. Procédé selon l'une quelconque des revendications 1 à 6, dans lequel au moins les étapes c) à f) sont réalisées pour chaque modification de configuration du système de sécurité (10, 20) constitué de manière modulaire avec des modules de système partiel (1, 2, 3, 4) et/ou dans lequel au moins les étapes c) à f) sont réalisées de manière cyclique et/ou dans lequel au moins les étapes c) à f) sont réalisées sur demande, en particulier sur demande d'un dispositif de commande central ou au moins d'un des modules de système partiel (1, 2, 3, 4).

8. Procédé selon l'une quelconque des revendications 1 à 7, dans lequel l'étape d) est réalisée au moyen d'une réglementation, auquel le dispositif de vérification (30) peut accéder.

9. Système qui est réalisé pour la réalisation du procédé selon l'une quelconque des revendications 1 à 8,
dans lequel le système réalise un système de sécurité (10, 20) qui comporte au moins deux modules de système partiel (1, 2, 4, 4) et est constitué de manière modulaire des au moins deux modules de système partiel (1, 2, 3, 4) et comporte un dispositif de vérification (30) connecté au système de sécurité (10, 20),
dans lequel le système de sécurité (10, 20) est réalisé afin de remplir des fonctions de sécurité déterminées et les au moins deux modules de système partiel (1, 2, 3, 4) sont réalisés afin de remplir respectivement pour eux des fonctions de sécurité,
dans lequel dans chacun des au moins deux modules de système partiel (1, 2, 3, 4), des valeurs caractéristiques réelles locales, liées à la sécurité, spécifiques au module sont enregistrées sous une forme lisible par machine et chacun des au moins deux modules de système partiel (1, 2, 3, 4) est réalisé avec une unité (1-1, 2-1, 3-1, 4-1) qui est réalisée pour la transmission des valeurs caractéristiques réelles locales, liées à la sécurité, spécifiques au module au dispositif de vérification (30),
dans lequel le dispositif de vérification (30) comporte
- une mémoire (31), dans laquelle des valeurs caractéristiques de consigne liées à la sécurité du système, en particulier de vraisemblances d'erreur résiduelle, taux de panne et/ou temps de réaction globaux, sont enregistrées sous une forme lisible par machine,
- une unité de communication (32) qui est aussi réalisée pour la transmission des valeurs caractéristiques réelles, locales liées à la sécurité, spécifiques au module des modules de système partiel (1, 2, 3, 4) au dispositif de vérification (30), en particulier par lecture des valeurs caractéristiques réelles par l'unité de communication (32) ou en ce que les modules de système partiel (1, 2, 3, 4) transmettent les valeurs caractéristiques réelles à partir d'eux,
- une unité de traitement (33) qui est réalisée pour le traitement des valeurs caractéristiques réelles locales lues liées à la sécurité, spécifiques au module en valeurs caractéristiques réelles, liées à la sécurité du système de sécurité (10, 20) qui résultent lors de la coopération des modules de système partiel (1, 2, 3, 4) individuels et lors de la réalisation du système de sécurité (10, 20) recouvrant les modules de système partiel (1, 2, 3, 4) individuels ;
une unité de comparaison (34) qui est réalisée pour la comparaison des valeurs caractéristiques réelles, liées à la sécurité résultantes du système de sécurité (10, 20) avec les valeurs caractéristiques de consigne enregistrées dans la mémoire (31) du système ; et
- une unité de génération de signal (35) qui est réalisée pour la génération d'un signal de réaction en fonction du résultat de comparaison et est de plus réalisée
afin de générer en cas de non-atteinte d'une valeur de consigne en ce qui concerne au moins une valeur de différence résultant lors de la comparaison comme signal de réaction, un signal de validation qui est utilisé pour la « validation » automatique de fonctions de sécurité actuelles du système de sécurité (10, 20),
dans lequel en cas de dépassement de la valeur seuil en ce qui concerne au moins une valeur de différence résultant lors de la comparaison comme signal de réaction afin de générer un signal de non-validation qui est utilisé pour mettre en défaut automatiquement la validation de fonctions de sécurité actuelles du système de sécurité (10, 20) .

10. Système selon la revendication 9, dans lequel chacun des au moins deux modules de système partiel (1, 2, 3, 4) présente une unité (1-2, 2-2, 3-2, 4-2) pour la réception d'un signal de réaction par le dispositif de vérification (30).

11. Système selon la revendication 10, dans lequel l'unité (1-2, 2-2, 3-2, 4-2) est réalisée pour la réception d'un signal de réaction pour la réception d'un signal de non-validation par le dispositif de vérification (30), dans lequel en particulier dans chacun des au moins deux modules de système partiel (1, 2, 3, 4), une réaction liée à la sécurité prédéterminée est déclenchée, et/ou l'unité (1-2, 2-2, 3-2, 4-2) est réalisée pour la réception d'un signal de réaction pour la réception d'un signal de validation par le dispositif de vérification (30).

12. Système selon l'une quelconque des revendications 9 à 11, dans lequel l'unité de communication (32) du dispositif de vérification (30) est réalisée pour la lecture des valeurs caractéristiques réelles locales, liées à la sécurité, spécifiques au module.
